# EUROPEAN PATENT SPECIFICATION

(11) **EP 4 574 605 B1**
(45) Date of publication and mention of the grant of the patent: **11.11.2026**
(21) Application number: 24221213.2
(22) Date of filing: 18.12.2024
(51) Int. Cl.: B60W 30/09, B60W 60/00

(54) **VEHICLE CONTROL APPARATUS, AND VEHICLE CONTROL METHOD**
FAHRZEUGSTEUERUNGSVORRICHTUNG UND FAHRZEUGSTEUERUNGSVERFAHREN
APPAREIL DE COMMANDE DE VÉHICULE ET PROCÉDÉ DE COMMANDE DE VÉHICULE

(30) Priority: 22.12.2023 JP 2023217129
(43) Date of publication of application: 25.06.2025
(73) Proprietor: TOYOTA JIDOSHA KABUSHIKI KAISHA, Toyota-shi Aichi 471-8571 (JP)
(72) Inventor: MIYAMOTO, Yuhei, TOYOTA-SHI, AICHI, 471-8571 (JP)
(74) Representative: Cabinet Beau de Loménie

(56) References cited:
- DE-A1- 102014 209 242
- US-A1- 2023 001 893
- US-A1- 2023 166 731

## Description

### TECHNICAL FIELD

The present disclosure relates to a vehicle control apparatus, and a vehicle control method, for performing a first control (e.g., a collision avoidance assistance control) for avoiding a collision between a host vehicle and an obstacle, and a second control (e.g., an emergency stop control) for decelerating to stop the host vehicle when a driver of the host vehicle is in a state (hereinafter, referred to as an "anomaly state") where he/she cannot drive the host vehicle properly.

### BACKGROUND

There has been a known vehicle control apparatus configured to detect an obstacle present in front of a host vehicle, and to perform an automatic braking as one of collision avoidance assistance operations, when it is predicted that the host vehicle may collide with the obstacle. One apparatus (hereinafter, referred to as a "conventional apparatus") is configured to, when a driving operation, such as an acceleration operation, and a steering operation, performed by a driver, is detected in a case where it is predicted that the host vehicle may collide with the obstacle, determine whether or not the driving operation is an erroneous operation.

The conventional apparatus does not perform the automatic braking, but gives a priority to the driving operation by the driver, when it is determined that the driving operation is not the erroneous operation. In other words, in such a case, the conventional apparatus permits an override. Whereas, the conventional apparatus prohibits the override and performs the automatic braking, when it is determined that the driving operation is the erroneous operation (refer to Japanese Patent Application Laid-Open No. 2012-121534).

In addition, an apparatus/system (i.e., an Emergency Driving Stop System: EDSS) has been developed in which it determines whether or the driver falls into the anomaly state including a state of sudden physical deterioration that the driver cannot predict in advance, and performs a control (hereinafter, referred to as an "emergency stop control") to decelerate the host vehicle to fully stop at a safe place when it determines that the driver falls into the anomaly state (refer to Japanese Patent Application Laid-Open No. 2017-190048). US 2023/0001893 A1 describes a vehicle control device, vehicle control method, and vehicle control program. US 2023/0166731 A1 describes devices and methods for assisting operation of vehicles based on situational assessment fusing exponential risks (SAFER). DE 10 2014 209 242 A1 describes an emergency evasive maneuver system for a motor vehicle with at least one steering system.

However, there has not been sufficient consideration of how to control the host vehicle, when it is predicted that the host vehicle collides with the obstacle, in a case the Emergency Driving Stop System has been performing the emergency stop control. Thus, in such a peculiar case, the host vehicle may not be controlled properly.

### SUMMARY

The present disclosure is made to cope with the above-described problem. Namely, one of objects of the present disclosure is to provide a vehicle control apparatus as defined in claim 1, a vehicle control method as defined in claim 15, and a non-transitory storage medium storing a program thereof, that are able to more properly/appropriately control the host in such a peculiar case.

One of embodiments (DS) of the vehicle control apparatus according to present disclosure comprises:
a first control system (a first control device 11) that executes a first operation for reducing a possibility of collision between a host vehicle and an obstacle that is present in a predicted traveling area of the host vehicle; and
a second control system (a second control device 12) that executes a second control for automatically stopping the host vehicle when information indicating that a driver of the host vehicle has fallen into an anomaly state where the driver cannot drive the host vehicle properly is obtained.

The vehicle control apparatus is configured to use/adopt a second control in-execution period first operation start condition that is necessary to be satisfied in order for the first system to start executing the first operation while the second control system is not executing the second control and a second control execution period first operation start condition that is necessary to be satisfied in order for the first system to start executing the first operation while the second control system is executing the second control. In addition, the second control in-execution period first operation start condition and the second control execution period first operation start condition are different from each other (step 230, step 240).

Accordingly, the "second control in-execution period first operation start condition that is necessary to be satisfied in order for the first system to start executing the first operation while the second control is not being executed" is different from the "second control execution period first operation start condition that is necessary to be satisfied in order for the first system to start executing the first operation while the second control is being executed". Therefore, as described below, the first operation to reduce the possibility of the collision can be properly/appropriately started depending on whether or not the second control to automatically stop the host vehicle is being executed.

In one of embodiments according to the present disclosure,
the second control in-execution period first operation start condition is a condition that is satisfied when a collision indication value correlating with a possibility that the host vehicle collides with the obstacle reaches a first collision determination threshold (step 440 and step 450);
the second control execution period first operation start condition is a condition that is satisfied when the collision indication value reaches a second collision determination threshold (step 470 and step 450); and
the second collision determination threshold is set to a value which the collision indication value reaches before a timing at which the collision indication value reaches the first collision determination threshold.

For example, the collision indication value is a collision margin time (TTC) that is a time length till a time point at which the host vehicle is predicted to collide with the obstacle; and
an early collision determination threshold (TthLarge) set as the second collision determination threshold is set to a value greater than a standard collision determination threshold (TthNormal) set as the first collision determination threshold.

According to the above embodiment, when the driver has fallen into the anomaly state, and thus, the second control to automatically stop the host vehicle is being executed, the first operation to reduce the possibility of the collision between the host vehicle and the obstacle is started at an earlier timing, as compared to when the second control to automatically stop the host vehicle is not being executed. Therefore, according to this embodiment, the collision between the host vehicle and the obstacle can be avoided more certainly. In addition, when the first operation is an automatic braking, the automatic braking that is the first operation starts to be executed at an earlier timing while the second control is being executed. This reduces a necessity that the host vehicle is rapidly decelerated by the automatic braking to avoid the collision. Accordingly, since the host vehicle is not rapidly decelerated by the automatic braking, a possibility that a following vehicle rapidly comes close to the host vehicle while the second control is being executed can be reduced.

In one of embodiments according to the present disclosure,
the second control in-execution period first operation start condition (refer to step 530: No) is a condition that is satisfied when a collision indication value correlating with a possibility that the host vehicle collides with the obstacle reaches a first collision determination threshold (step 580, step 560: Yes) in a case where an operation determination condition that is satisfied when the driver is operating a driving operation element (91a, 92a, SW) of the host vehicle is not satisfied (step 540: No), and the second control in-execution period first operation start condition is a condition that is satisfied when the collision indication value reaches a third collision determination threshold (step 550, step 560: Yes) in a case where an operation determination condition is satisfied (step 540: Yes);
the second control execution period first operation start condition (refer to step 530: Yes) is a condition that is satisfied when the collision indication value reaches the first collision determination threshold regardless of whether or not the operation determination condition is satisfied (step 580, step 560: Yes); and
the third collision determination threshold is set to a value which the collision indication value reaches after a timing at which the collision indication value reaches the first collision determination threshold.

For example, the collision indication value is a collision margin time (TTC) that is a time length till a time point at which the host vehicle is predicted to collide with the obstacle; and
a delay collision determination threshold (TthSmall) set as the third collision determination threshold is set to a value smaller than a standard collision determination threshold (TthNormal) set as the first collision determination threshold.

According to the above embodiment, in a case where the second control to automatically stop the host vehicle is not being executed, the first operation starts to be executed at a later timing when the operation determination condition that is satisfied when the driver is operating the driving operation element of the host vehicle is satisfied as compared to when the operation determination condition is not satisfied. When the second control is not being executed, there is a possibility that the driver tries to avoid the collision by operating the driving operation element. Therefore, this embodiment can avoid an occurrence of a situation where the first operation intervenes too early so as to obstruct a collision avoidance behavior by the operation of the driving operation element.

Whereas, in a case where the second control to automatically stop the host vehicle is being executed, the driver's driving operation is unlikely to be performed properly. In view of this, according to the above embodiment, such a driver's driving operation is ignored, the first operation is started at an early timing (i.e., which is the same timing as one when the operation determination condition is not satisfied while the second control is not being executed). Therefore, according to this embodiment, the collision between the host vehicle and the obstacle can be avoided more certainly. In addition, when the first operation is the automatic braking, the automatic braking starts to be executed at an earlier timing while the second control is being executed. This reduces a necessity that the host vehicle is rapidly decelerated by the automatic braking. Accordingly, a possibility that a following vehicle rapidly comes close to the host vehicle due to the automatic braking applied to the host vehicle while the second control is being executed can be reduced.

In one of embodiments according to the present disclosure,
the second control in-execution period first operation start condition (refer to step 615: No) is a condition that is satisfied when a collision indication value correlating with a possibility that the host vehicle collides with the obstacle reaches a first collision determination threshold (step 645, step 635) in a case where a second control in-execution period operation determination condition that is satisfied when the driver is operating a driving operation element of the host vehicle is not satisfied (step 625: No), and the second control in-execution period first operation start condition is a condition that is satisfied when the collision indication value reaches a third collision determination threshold (step 630, step 635: Yes) in a case where the second control in-execution period operation determination condition is satisfied (step 625: Yes); and
the second control execution period first operation start condition (refer to step 615: Yes) is a condition that is satisfied when the collision indication value reaches the first collision determination threshold (step 645, step 635: Yes) in a case where a second control execution period operation determination condition that is satisfied when the driver is operating the driving operation element is not satisfied (step 625: No) , and the second control execution period first operation start condition is a condition that is satisfied when the collision indication value reaches the third collision determination threshold (step 630, step 635: Yes) in a case where the second control execution period operation determination condition is satisfied (step 625: Yes) ;
the second control execution period operation determination condition is set to a condition that is satisfied when the driver operates the driving operation element more quickly or more greatly as compared to the second control in-execution period operation determination condition (step 615, step 620, step 650); and
the third collision determination threshold is set to a value which the collision indication value reaches after a timing at which the collision indication value reaches the first collision determination threshold (step 630, step 645).

For example, the collision indication value is a collision margin time (TTC) that is a time length till a time point at which the host vehicle is predicted to collide with the obstacle; and
a delay collision determination threshold (TthSmall), set as the third collision determination threshold is set to a value smaller than a standard collision determination threshold (TthNormal) set as the first collision determination threshold.

According to the above embodiment, the operation determination condition (i.e., the second control execution period operation determination condition) while the second control to automatically stop the host vehicle is being executed is set to a condition that is satisfied when the driver operates the driving operation element more quickly or more greatly, as compared to the operation determination condition (i.e., the second control in-execution period operation determination condition) while the second control to automatically stop the host vehicle is not being executed. Accordingly, when it is likely that the driver has fallen into the anomaly state (i.e., during the second control is being executed), the driver's collision avoidance operation is permitted only if a clearer (or more certain) driving operation is detected.

In one of embodiments according to the present disclosure,
the second control in-execution period first operation start condition (refer to step 770: No) is a condition that is satisfied when a collision indication value correlating with a possibility that the host vehicle collides with the obstacle reaches a first collision determination threshold (step 740, step 750: Yes) in a case where a second control in-execution period operation determination condition that is satisfied when the driver is operating a driving operation element of the host vehicle is not satisfied (step 730: No), and the second control in-execution period first operation start condition is a condition that is satisfied when the collision indication value reaches a third collision determination threshold (step 780, step 750: Yes) in a case where the second control in-execution period operation determination condition is satisfied (step 730: Yes); and
the second control execution period first operation start condition (refer to step 770: Yes) is a condition that is satisfied when the collision indication value reaches the first collision determination threshold (step 740, step 750: Yes) in a case where a second control execution period operation determination condition that is satisfied when the driver is operating the driving operation element is not satisfied (step 730: No), and the second control execution period first operation start condition is a condition that is satisfied when the collision indication value reaches fourth collision determination threshold (step 790, step 750: Yes) in a case where the second control execution period operation determination condition is satisfied (step 730: Yes).

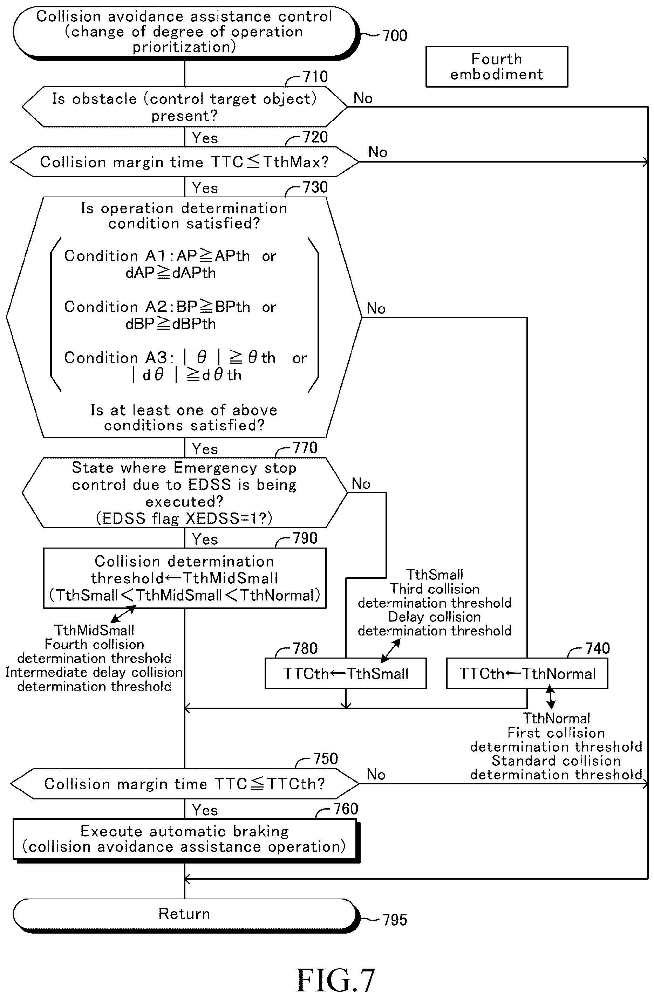

Namely, in this embodiment, the second control in-execution period operation determination condition and the second control execution period operation determination condition are both checked as the operation determination condition at step 730 shown in FIG. 7. Therefore, when it is determined that the operation determination condition is not satisfied (step 730: No), the first operation start condition is a condition that is satisfied when the collision indication value reaches the first collision determination threshold regardless of whether or not the second control is being executed (step 740, step 750).

Furthermore,
the second control execution period operation determination condition:
is a condition which is the same as the second control in-execution period operation determination condition (step 730), or
is set to a condition that is satisfied when the driver operates the driving operation element more quickly or more greatly as compared to the second control in-execution period operation determination condition (refer to steps similar to step 615, step 620, and step 650).

In addition,
the third collision determination threshold is set to a value which the collision indication value reaches after a timing at which the collision indication value reaches the first collision determination threshold (step 780); and
the fourth collision determination threshold is set to a value which the collision indication value reaches after a timing at which the collision indication value reaches the first collision determination threshold and before a timing at which the collision indication value reaches the third collision determination threshold (step 790).

For example, the collision indication value is a collision margin time (TTC) that is a time length till a time point at which the host vehicle is predicted to collide with the obstacle;
a delay collision determination threshold (TthSmall) set as the third collision determination threshold is set to a value smaller than a standard collision determination threshold (TthNormal) set as the first collision determination threshold; and
an intermediate delay collision determination threshold (TthMidSmall) set as the fourth collision determination threshold is set to a value smaller than the standard collision determination threshold (TthNormal) and greater than the delay collision determination threshold (TthSmall).

According to the above embodiment, when the operation determination condition is satisfied, the execution timing of the first operation is made earlier when the second control is being executed than when the second control is not being executed.

Therefore, when the driving operation element is operated while the second control is being executed, although the driver's collision avoidance operation based on the operation of the driving operation elements is permitted tentatively, the first operation is started relatively earlier, as compared to (than) when the driving operation element is operated while the second control is not being executed. This can reduce the possibility that the host vehicle collides with the obstacle while the second control is being executed.

In one of embodiments according to the present disclosure,
the first control system is configured to:
in a case where the second control is not being executed (step 810),
in a state where a collision indication value correlating with a possibility that the host vehicle collides with the obstacle reaches a second control in-execution period collision determination threshold (step 815: Yes),
determine that the second control in-execution period first operation start condition is satisfied to start executing the first operation (step 920, step 825: Yes, step 830) when a second control in-execution period operation determination condition that is satisfied when the driver is operating a driving operation element of the host vehicle is not satisfied (step 910: No), and
not execute the first operation (step 930, step 825: No, step 835) when second control in-execution period operation determination condition is satisfied (step 910: Yes).

It can be said that the meaning of not executing the first operation is to prohibit the first operation or to cancel the first operation.

### Furthermore,

in a case where the second control is being executed (step 810: Yes),
in the state where the collision indication value reaches a second control execution period collision determination threshold (step 840: Yes),
determine that the second control execution period first operation start condition is satisfied to start executing the first operation (step 1020, step 850: Yes, step 855) when a second control execution period operation determination condition that is satisfied when the driver is operating the driving operation element is not satisfied (step 1010: No), and
not execute the first operation (step 1030, step 850: No, step 860) when second control execution period operation determination condition is satisfied (step 1010: Yes).

In addition, the second control execution period collision determination threshold is set to a value which the collision indication value reaches before the collision indication value reaches the second control in-execution period collision determination threshold (step 810, step 815), and
the second control execution period operation determination condition is set to a condition that is different from the second control in-execution period operation determination condition (step 820, FIG. 9, step 845, FIGs 10 and 11).

In this embodiment, whether or not the second control execution period operation determination condition is satisfied is determined from an earlier timing (i.e., a timing at which the collision indication value reaches the second control execution period collision determination threshold), and the first operation can be started based on the determination result. Accordingly, the collision between the host vehicle and the obstacle can be avoided more certainly. In addition, if the first operation is the automatic braking, the automatic braking is started relatively earlier when the second control is being executed. Therefore, a necessity that the host vehicle is rapidly decelerated by the automatic braking is low. Consequently, a possibility that a following vehicle suddenly comes close to the host vehicle due to the automatic braking that is the first operation applied to the host vehicle can be reduced.

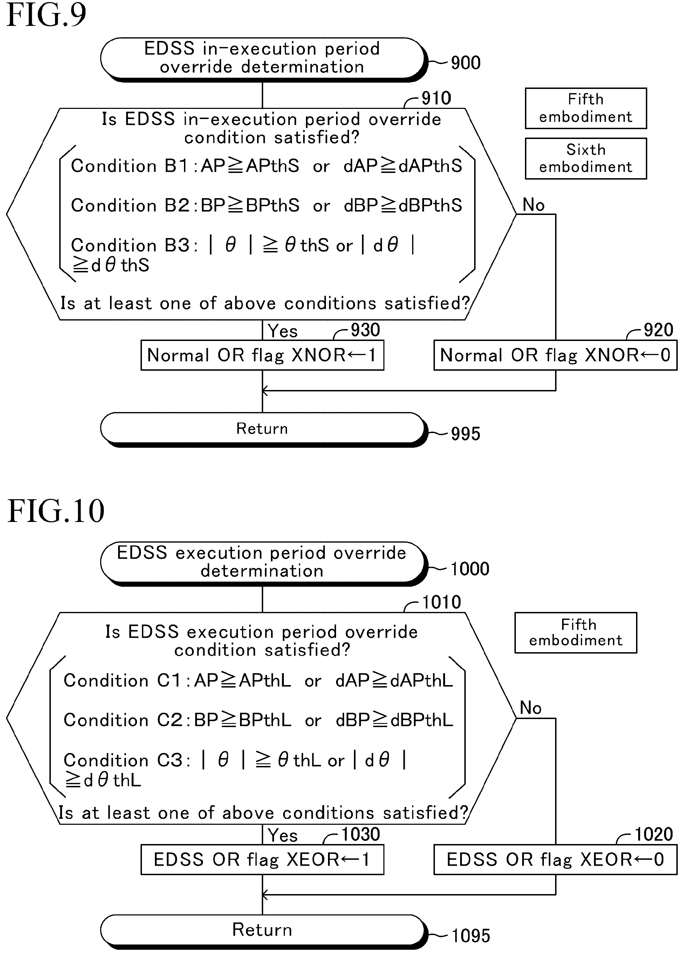

In the above-described embodiment, the second control execution period operation determination condition is set to a condition that is satisfied when the driver operates the driving operation element more quickly or more greatly as compared to the second control in-execution period operation determination condition (step 910 shown in FIG. 9, and step 1010 shown in FIG. 10).

Accordingly, when it is likely that the driver has fallen into the anomaly state (i.e., during the second control is being executed), the driver's collision avoidance operation is permitted only if a clearer (or more certain) driving operation is detected.

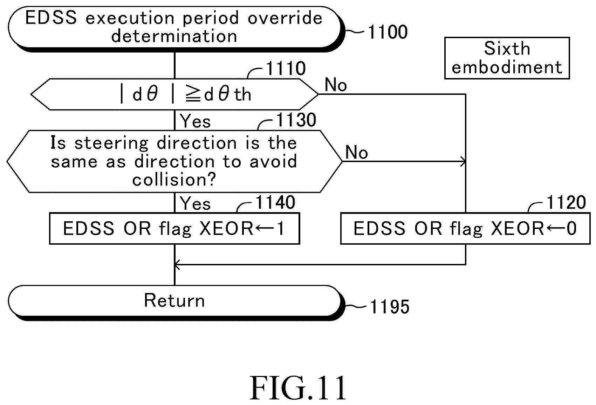

In the above-described embodiment,
the second control in-execution period operation determination condition is set to a condition that is satisfied regardless of a traveling direction of the host vehicle by steering operation of the host vehicle when the steering operation is performed (step 820, FIG. 9); and
the second control execution period operation determination condition is set to a condition that is satisfied when the steering operation is performed and the traveling direction of the host vehicle by the steering operation is changed to a direction to avoid the collision between the host vehicle and the obstacle (step 845, FIG. 11).

In the above-described embodiment,
the second control in-execution period operation determination condition is set to a condition that is satisfied when at least one of an acceleration pedal of the host vehicle, a brake pedal of the host vehicle, and a steering wheel of the host vehicle is operated (step 910); and
the second control execution period operation determination condition is set to a condition that is satisfied when a "state of collision avoidance by steering where a steering operation onto the steering wheel is performed and a traveling direction of the host vehicle by the steering operation is changed to a direction to avoid the collision between the host vehicle and the obstacle" is occurring, but that is not satisfied when the "state of collision avoidance by steering" is not occurring even if any one of the acceleration pedal of the host vehicle and the brake pedal of the host vehicle is operated (step 1110, step 1130).

According to these embodiments, second control execution period operation determination condition is set to the condition that is satisfied when a steering operation onto the steering wheel is performed and a traveling direction of the host vehicle by the steering operation is changed to a direction to avoid the collision between the host vehicle and the obstacle. Therefore, while the second control is being executed, when the collision avoidance operation by the driver's steering operation is clearly for avoiding the collision, the first operation is not executed, and the collision avoidance operation by the driver's steering operation is prioritized.

In these embodiments,
the collision indication value is a collision margin time (TTC) that is a time length till a time point at which the host vehicle is predicted to collide with the obstacle; and
the second control execution period collision determination threshold (TTCthL) is set to a value greater than the second control in-execution period collision determination threshold (TTCthS).

According to this embodiment, whether or not the second control execution period operation determination condition is satisfied is determined from an earlier timing (i.e., a timing at which the collision indication value reaches the second control execution period collision determination threshold), and the first operation can be started based on the determination result. Accordingly, if the first operation is the automatic braking, the automatic braking is started relatively earlier when the second control is being executed. Therefore, a necessity that the host vehicle is rapidly decelerated by the automatic braking is low. Consequently, a possibility that a following vehicle suddenly comes close to the host vehicle due to the automatic braking that is the first operation applied to the host vehicle can be reduced.

Notably, in the above description, in order to facilitate understanding of the present disclosure, the constituent elements corresponding to those of an embodiment which will be described later are accompanied by parenthesized symbols and/or names which are used in the embodiment; however, the constituent elements of the disclosure are not limited to those in the embodiment defined by the symbols and/or names. The present disclosure covers a vehicle control method, and a non-transitory storage medium storing a program thereof.

### BRIEF DESCRIPTION OF THE DRAWINGS

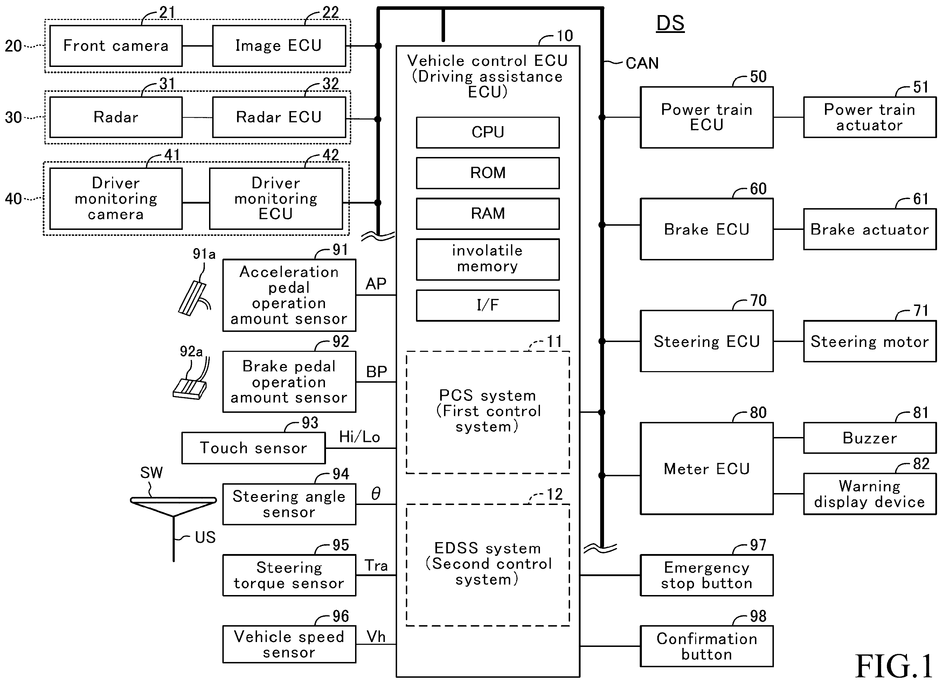

FIG. 1 is a schematic diagram of a vehicle control apparatus according to each embodiment of the present disclosure.

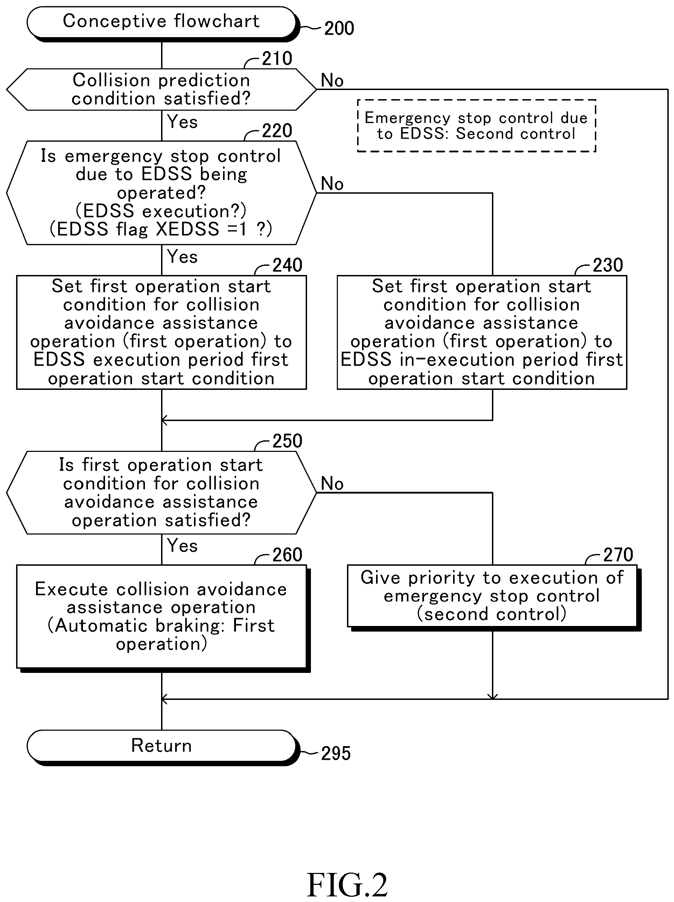

FIG. 2 is a conceptive flowchart for describing an operation of the vehicle control apparatus according to each embodiment of the present disclosure.

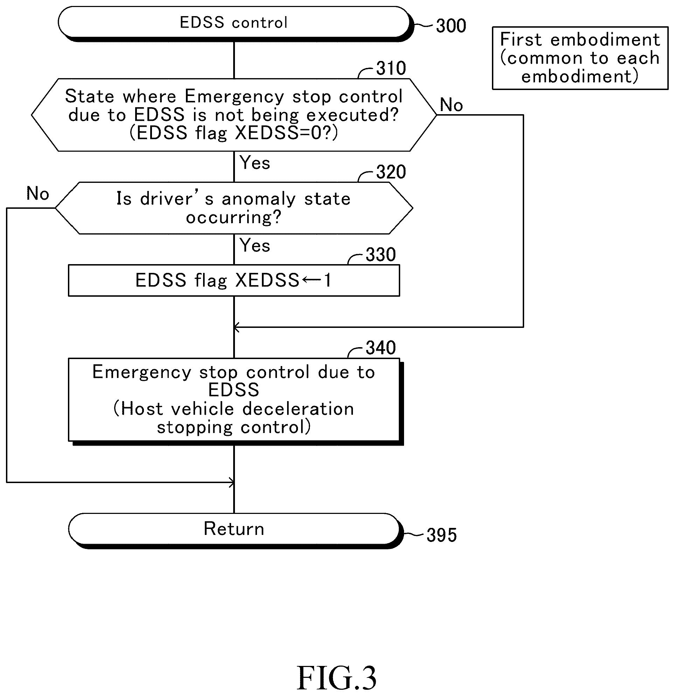

FIG. 3 shows a routine executed by a CPU of the vehicle control ECU according to each embodiment of the present disclosure

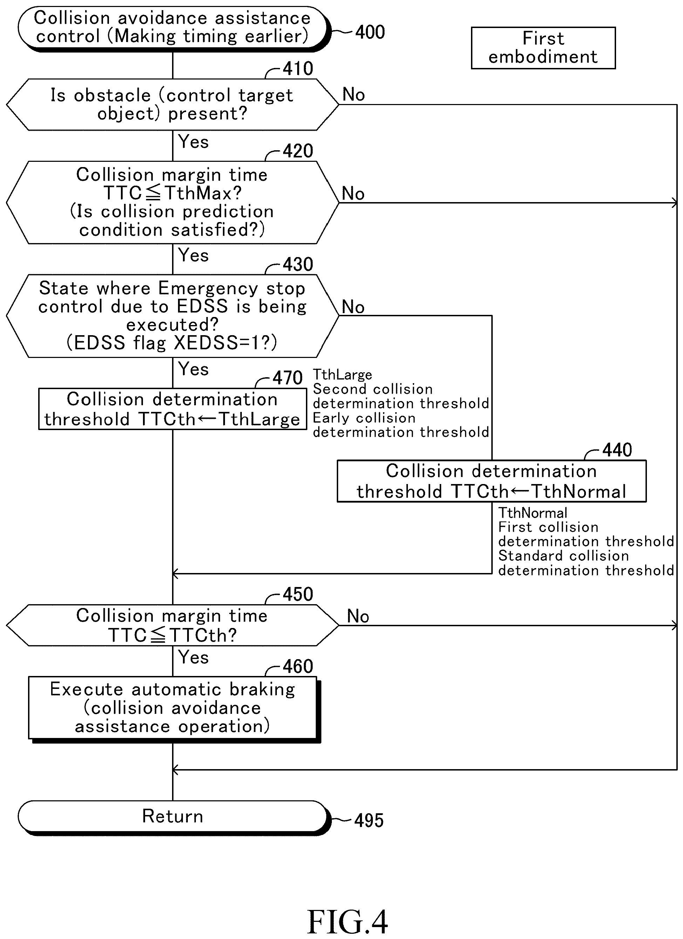

FIG. 4 shows a routine executed by the CPU of the vehicle control ECU according to a first embodiment of the present disclosure.

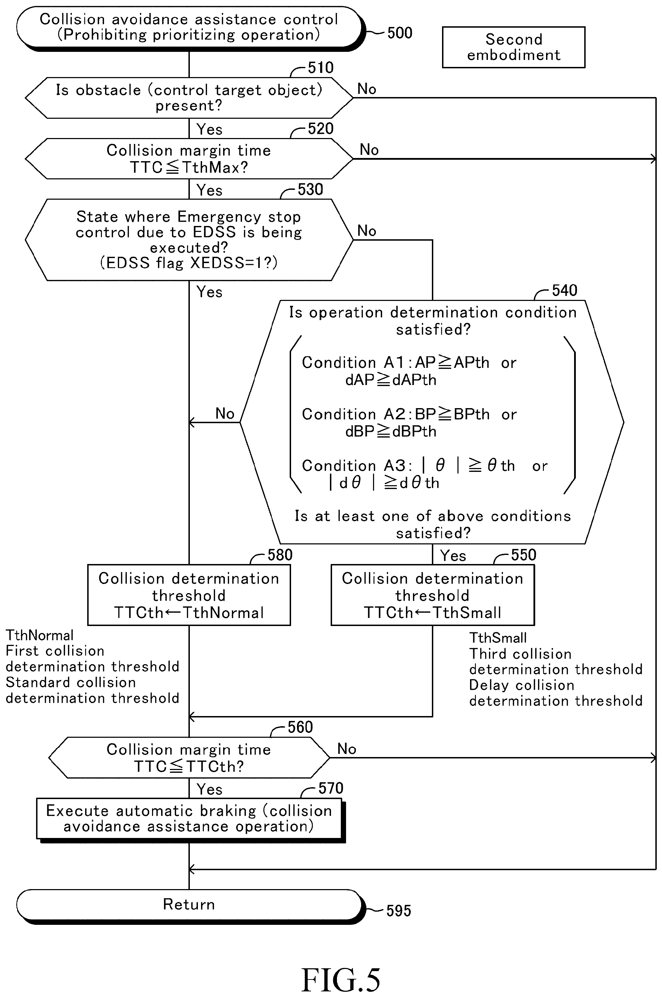

FIG. 5 shows a routine executed by the CPU of the vehicle control ECU according to a second embodiment of the present disclosure.

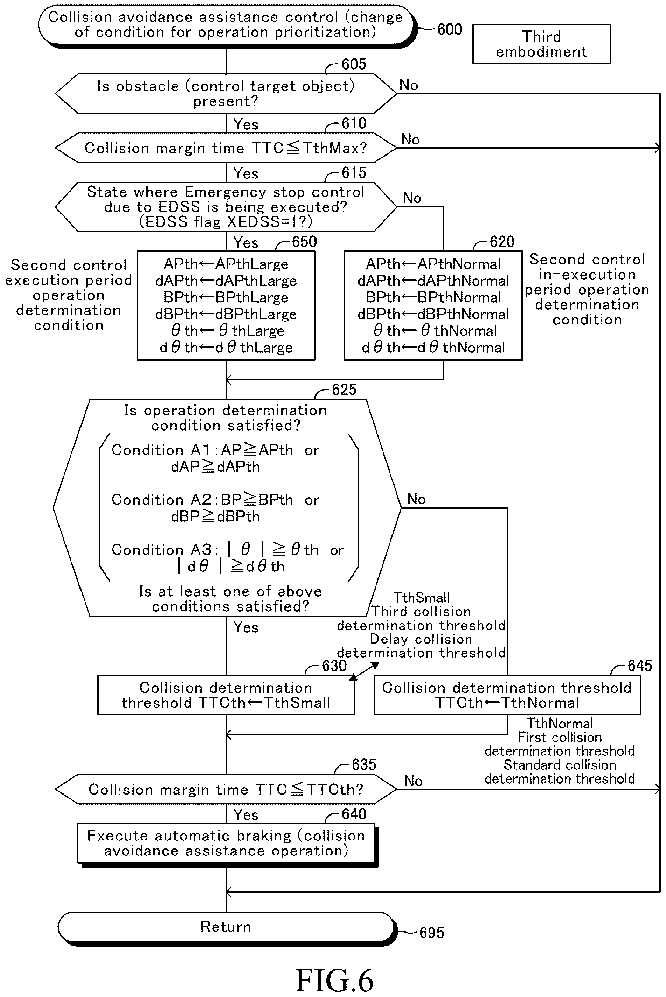

FIG. 6 shows a routine executed by the CPU of the vehicle control ECU according to a third embodiment of the present disclosure.
FIG. 7 shows a routine executed by the CPU of the vehicle control ECU according to a fourth embodiment of the present disclosure.

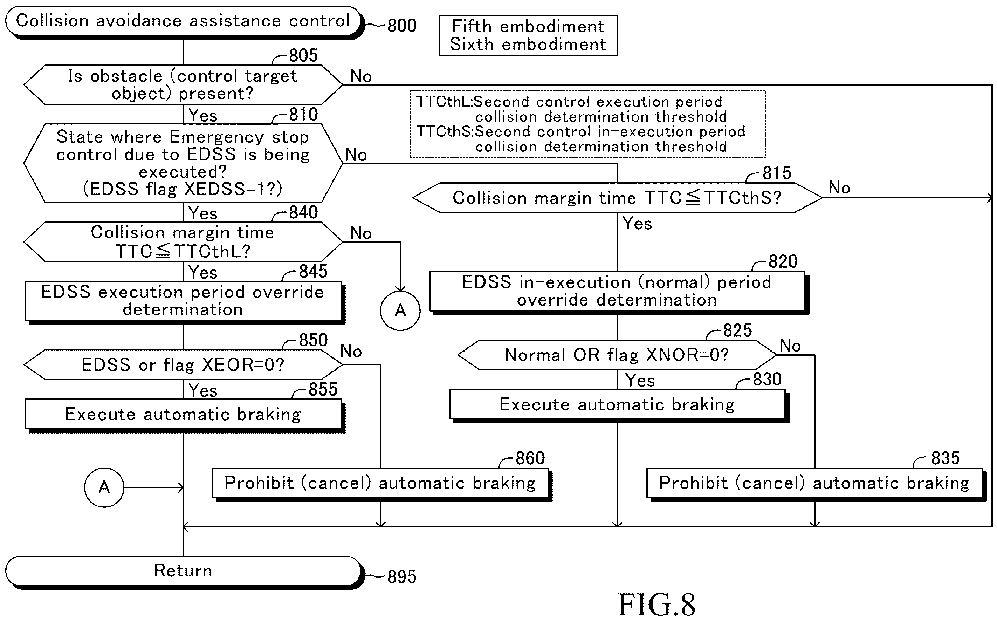

FIG. 8 shows a routine executed by the CPU of the vehicle control ECU according to a fifth and a sixth embodiments of the present disclosure.
FIG. 9 shows a routine executed by the CPU of the vehicle control ECU according to the fifth and the sixth embodiments of the present disclosure.
FIG. 10 shows a routine executed by the CPU of the vehicle control ECU according to the fifth embodiment of the present disclosure.
FIG. 11 shows a routine executed by the CPU of the vehicle control ECU according to the sixth embodiment of the present disclosure.

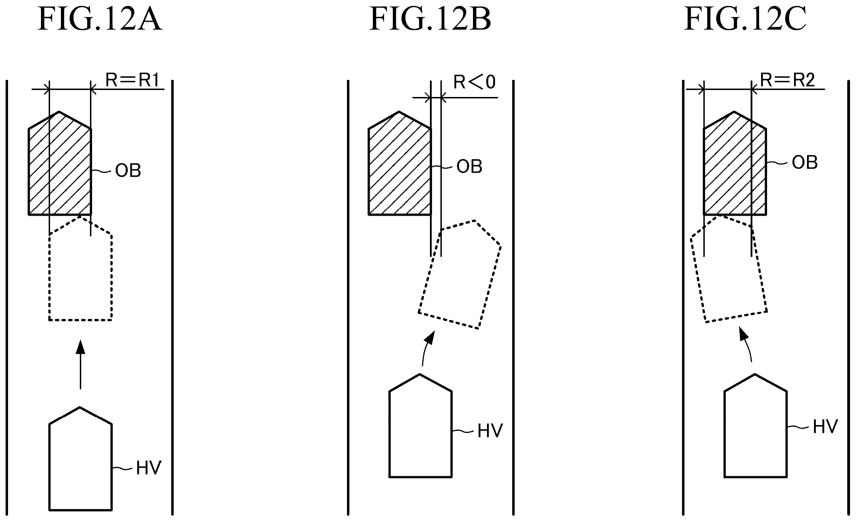

FIG. 12A shows a figure for describing an operation of the sixth embodiment of the present disclosure.
FIG. 12B shows a figure for describing the operation of the sixth embodiment of the present disclosure.
FIG. 12C shows a figure for describing the operation of the sixth embodiment of the present disclosure.

### DETAILED DESCRIPTION

A vehicle control apparatus DS (hereinafter, referred to as a "present disclosure apparatus DS") according to each embodiment of the present disclosure is applied to and/or is mounted on a vehicle. The vehicle which the present disclosure apparatus DS is applied to may sometimes be referred to as a "host vehicle" in order to discriminated it from other vehicles. The host vehicle may be one of a vehicle having an internal combustion engine as a drive source, a vehicle having an electric motor as a drive source (namely, an electric vehicle), and a hybrid vehicle.

### <Configuration>

As shown in FIG. 1, the present disclosure apparatus DS comprises a vehicle control ECU 10 (a driving assistance ECU 10), a camera device 20, a radar device 30, a driver monitoring device 40, a power train ECU 50, a brake ECU 60, a steering ECU 70, and a meter ECU 80.

In the present specification, an "ECU" means an electronic control device/unit (i.e., a control unit), that includes a microcomputer. The microcomputer includes a CPU (a processor), a ROM, a RAM, a data writable involatile memory, and an interface (an I/F). The ECU may sometimes be referred to as a "controller" or a "computer". A plurality of the above-described ECUs are connected to each other through Controller Area Network (CAN) in such a manner that they can exchange information with each other. Some or all of the ECUs may be integrated into a single ECU. In addition, one of the ECUs may be implemented by a plurality of ECUs.

The vehicle control ECU 10 performs/executes a first control that is a collision avoidance assistance control (collision avoidance control) for avoiding a collision between a host vehicle and an obstacle, and a second control that is an emergency stop control for decelerating the host vehicle to stop it when a driver of the host vehicle is in the anomaly state. In the first control, an operation to change a behavior of the host vehicle (namely, a collision avoidance assistance operation such as an automatic braking) may be referred to as a first operation.

The vehicle control ECU 10 includes a vehicle control ECU (i.e., a pre-crash safety. ECU= a PCS·ECU) that performs the collision avoidance assistance control and a driver anomaly state handling ECU (i.e., an Emergency Driving Stop System·ECU = an EDSS·ECU). In other words, the vehicle control ECU 10 is an ECU having functions to form two systems including the PCS system 11 and the EDSS system 12. The PCS system 11 may be referred to as a first control system or a first control device, for convenience. The EDSS system 12 may be referred to as a second control system or a second control device, for convenience.

A camera device 20 includes a front camera 21 and an image ECU 22. The camera 21 captures (or takes a picture of) a "scene in front of the host vehicle" so as to obtain image data. The image ECU 22 analyzes the image data sent from the camera 21 every time a predetermined time elapses so as to generate/produce camera information. The image ECU 22 transmits the camera information to the vehicle control ECU 10, every time the predetermined time elapses. The camera information includes the image data itself, camera object information, and lane information. The camera object information includes "a position with respect to the host vehicle, a relative longitudinal speed, a relative lateral speed, and a type" of an object included in the image data (i.e. an object whose picture is taken). The lane information includes "a position of the host vehicle in a lane width direction (i.e., a lateral position) and an angle of the host vehicle" relative to a right and a left demarcation lines (i.e., lane markers, including white lines and yellow lines) that define a lane (i.e., a host lane) in which the host vehicle is traveling.

The radar device 30 is a well-known device configured to obtain information on an object present in front of the host vehicle, using electrical waves in a millimeter waveband. The radar device 30 includes a radar 31 and a radar ECU 32. The radar 31 transmits millimeter waves within a predetermined detection range in front of the host vehicle, and receives the millimeter waves (i.e., reflected waves) reflected by the object. The radar 31 transmits information on transmitted millimeter waves and information on received millimeter waves to the radar ECU 32. The radar ECU 32 obtains radar information, based on the information sent from the radar 31, every time a predetermined time has elapses. The radar ECU 32 transmits the radar information to the vehicle control ECU 10, every time the predetermined time has elapses. The radar information includes a distance to the object, an azimuth of the object, and a relative speed of the object.

Note that the vehicle control ECU 10 fuses the camera object information and the radar information to produce fusion object information, that includes the position of the object (i.e., the longitudinal distance to the object, the lateral position of the object, and the azimuth of the object), the relative speed of the object, and the type of the object. Accordingly, the vehicle control ECU 10, the camera device 20, and the radar device 30 constitutes "an object detection device" that acquires information on an object present in front of the host vehicle.

The driver monitoring device 40 is a device that obtains information (i.e., driver's information) on conditions of the driver of the host vehicle (including the direction of the line of sight of the driver and the face direction of the driver). The driver monitoring device 40 includes a driver monitoring camera 41 and a driver monitoring ECU 42. The driver monitoring device 40 is well-know, and is disclosed in, for example, Japanese Patent Application Laid-Open No. 2019-87143, Japanese Patent Application Laid-Open No. 2019-87029, Japanese Patent Application Laid-Open No. 2016-38866, and Japanese Patent Application Laid-Open No. 2013-152700.

The driver monitoring camera 41 is disposed at an appropriate position (e.g., an upper position of a steering column) in front of a driver's seat of the host vehicle, and is configured to produce face image data of the driver by capturing (taking a picture of) the driver's face every time a predetermined time elapses. The driver monitoring ECU 42 obtains above-described driver's information based on the face image data sent from the driver monitoring camera 41, and transmits the driver's information to the vehicle control ECU 10.

A power train ECU 50 is connected with a power train actuator 51. The power train actuator 51 is an actuator for controlling an unillustrated power train of the host vehicle (i.e., the drive force generation device such as the internal combustion engine and the electric motor, and a drive force transmission device) so as to vary the drive force transmitted to drive wheels of the host vehicle. Therefore, the power train ECU 50 can vary the drive force of the host vehicle by controlling the power train actuator 51.

A brake ECU 60 is connected with a brake actuator 61. The brake actuator 61 an actuator for controlling an unillustrated brake device of the host vehicle (e.g., unillustrated frictional brake devices attached to wheels of the host vehicle) so as to vary a brake force (e.g., a frictional brake force) applied to the host vehicle. The brake ECU 60 can automatically apply the brake force to the host vehicle based on an instruction from the vehicle control ECU 10. In other words, the vehicle control ECU 10 and the brake ECU 60 can perform/execute "an automatic braking and a vehicle deceleration and stop control (i.e., the emergency stop control)" described later in detail.

The steering EUC 70 is a control device for a well-known electric power steering system, and is connected with a steering motor 71. The steering motor 71 is incorporated into a steering mechanism including a steering wheel SW, a steering shaft US connected to the steering wheel SW, and a gear mechanism for steering. The steering motor 71 is able to vary a steered angle of steered wheels of the host vehicle based on an instruction from the steering ECU 70.

The meter ECU 80 is connected with a buzzer (an in-cabin warning sound generation device) 81, and a warning display device 82 incorporated in a meter display, so as to control these.

The vehicle control ECU 10 are connected with sensors and buttons described below, and receives detected signals or output signals from them. Note that each of the sensors or buttons may be connected to an ECU other than the vehicle control ECU 10. In such a case, the vehicle control ECU 10 receives the "detected signals or output signals" of them, from the ECU to which the sensors or buttons are connected, via the CAN.

An acceleration pedal operation amount sensor 91 detects an operation amount (i.e., an acceleration opening degree) of the acceleration pedal 91a of the host vehicle as one of driving operation elements so as to output a signal indicative of an acceleration pedal operation amount AP.

A brake pedal operation amount sensor 92 detects an operation amount of a brake pedal 92a of the host vehicle as one of the driving operation elements so as to output a signal indicative of a brake operation amount BP.

A touch sensor 93 outputs a high level signal when the driver touches the steering wheel SW of the host vehicle as one of the driving operation elements, and outputs a low level signal when the driver does not touch the steering wheel SW.

A steering angle sensor 94 detects a rotation angle of the steering wheel SW as one of the driving operation elements so as to output a steering angle θ.

A steering torque sensor 95 detects a steering torque caused by an operation to the steering wheel SW as one of the driving operation elements and applied to the steering shaft US, so as to output a steering torque Tra.

A vehicle speed sensor 96 detects a traveling speed (vehicle speed) of the host vehicle so as to output a signal indicative of a host vehicle speed Vh.

Note that the acceleration pedal operation amount sensor 91, the brake pedal operation amount sensor 92, the steering angle sensor 94, the steering torque sensor 95, and the like are driving operation element state acquiring devices that acquire operation element state parameters indicative of states of the driving operation elements of the host vehicle.

Also note that the acceleration pedal operation amount sensor 91, the brake pedal operation amount sensor 92, the touch sensor 93, the steering angle sensor 94, the steering torque sensor 95 as well as the driver monitoring device 40 are driver's state acquiring devices that acquire driver's state parameters indicative of states of the driver of the host vehicle.

Furthermore, the vehicle control ECU 10 is connected with an emergency stop button 97 and a confirmation button 98.

The emergency stop button 97 is disposed at an appropriate position in such a manner that the driver can operate it. The emergency stop button 97 is a button pushed (operated) by the driver of the host vehicle or by passengers other than the driver, when the driver falls into the anomaly state. The emergency stop button 97 outputs an emergency stop signal when it is pushed (operated). The emergency stop signal is one of the signals indicative of the driver's state parameter.

The confirmation button 98 is disposed at an appropriate position in such a manner that the driver can operate it. The confirmation button 98 outputs a confirmation signal when it is pushed (operated). The confirmation signal is one of the signals indicative of the driver's state parameter.

### (Outline of operation)

As described later, the present disclosure apparatus DS acquires information indicative of whether or not the driver of the host vehicle has fallen into "the state (i.e., the anomaly state) where the driver cannot drive the host vehicle properly", based on the driver's state parameters. When the present disclosure apparatus DS obtains the information indicating that the driver has fallen into the anomaly state, it performs the emergency stop control (i.e., the emergency stop control by or due to the EDSS) that is a vehicle deceleration stopping control to moderately decelerate the host vehicle to stop the host vehicle.

As shown in a conceptive flowchart in FIG. 2, the present disclosure apparatus DS determines, based on the information (i.e., the fusion object information) obtained by the object detection device, whether or not a collision prediction condition that is satisfied when it is predicted that the host vehicle is likely to collide with an object is satisfied (step 210).

When the present disclosure apparatus DS determines that collision prediction condition is satisfied (step 210: Yes), it determines whether or not the emergency stop control (i.e., the second control) is being performed/executed due to the EDSS (step 220). When the emergency stop control is not being executed, the present disclosure apparatus DS sets a condition that is required for the collision avoidance assistance control to be performed (hereinafter, referred to as a "first operation start condition") to an "EDSS in-execution period first operation start condition (i.e., a normal first operation start condition)" (step 230). Whereas, when the emergency stop control is being performed, the present disclosure apparatus DS sets the condition that is required for the collision avoidance assistance control to be performed (i.e., the first operation start condition) to an "EDSS execution period first operation start condition (i.e., a first operation start condition during an execution of the emergency stop control)" (step 240).

The present disclosure apparatus DS determines whether or not the thus set first operation start condition for the collision avoidance assistance operation becomes satisfied (step 250). When the first operation start condition for the collision avoidance assistance operation becomes satisfied (step 250: Yes), the present disclosure apparatus DS starts performing/executing the automatic braking as the collision avoidance assistance operation (step 260). Whereas, when the first operation start condition for the collision avoidance assistance operation has not become satisfied (step 250: No), the present disclosure apparatus DS gives a priority to the execution of the emergency stop control without starting executing the automatic braking (step 270).

The automatic braking is a control to automatically apply the brake force to the host vehicle using the brake device without requiring the brake operation by the driver, in such a manner that the collision between the host vehicle and the obstacle is avoided or a damage caused by the collision is mitigated. The automatic braking may sometimes be referred to as a collision avoidance braking or a collision mitigation braking. The automatic braking itself is well-known. Note that the present disclosure apparatus DS controls the power train actuator 51 in such a manner that a drive force transmitted to the drive wheels of the host vehicle is equal to or smaller than a creeping force, even when the acceleration pedal operation amount AP varies during the execution of the automatic braking.

In this manner, the present disclosure apparatus DS changes the first operation start condition for the collision avoidance assistance operation depending on whether or not the emergency stop control due to the EDSS is being performed.

### <First embodiment>

A vehicle control apparatus according to a first embodiment of the present disclosure (hereinafter, referred to as a "first apparatus") sets "an execution condition for the collision avoidance assistance operation" to "a first condition" when emergency stop control due to the EDSS is being executed in a case where the first apparatus determines that the collision prediction condition becomes satisfied, and sets "the execution condition for the collision avoidance assistance operation" to a second condition" when emergency stop control due to the EDSS is not being executed in the case where the first apparatus determines that the collision prediction condition becomes satisfied. The first condition is a condition that is more easily satisfied than the second condition. As a result, the collision avoidance assistance operation is started earlier when the emergency stop control due to the EDSS is being executed than when the emergency stop control due to the EDSS is not being executed.

### (Specific operation)

The CPU of the vehicle control ECU 10 of the first apparatus executes routines shown by flowcharts in FIGs. 3 and 4, every time a predetermined time elapses. Note that the routine shown in FIG. 3 is an EDSS control routine that the vehicle control ECU 10 according to the other embodiments and modified examples of the present disclosure apparatus DS executes as well.

### <<EDSS control>>

When an appropriate time point comes, the CPU starts processing from S300 in FIG. 3, and proceeds to step 310. At step 310, the CPU determines whether or not the emergency stop control due to the EDSS is currently being not executed (i.e., whether or not the emergency stop control due to the EDSS is in an in-execution/un-executed state).

Specifically, the CPU determines whether or not a value of the EDSS flag XEDSS is "0" at step 310. The EDSS flag XEDSS indicates that the emergency stop control due to the EDSS is being currently executed when the value of the EDSS flag XEDSS is "1", and is not currently being executed when the value of the EDSS flag XEDSS is "0". Note that the values of the EDSS flag XEDSS and values of the other flags described later are set to "0" through an unillustrated initialization routine executed by the CPU when a position of an unillustrated activation switch (e.g., an ignition key switch or a ready switch) of the host vehicle is changed from an off-position to an on-position.

When the emergency stop control due to the EDSS is currently not being executed (i.e., when the value of the EDSS flag XEDSS is "0"), the CPU makes a "Yes" determination at step 310, and proceeds to step 320. At step 320, the CPU determines whether or not the driver has fallen into the anomaly state (i.e., whether or not a driver's anomaly state is occurring). As stated above, the expression that the driver has fallen into the anomaly state means that the driver has fallen into the state of sudden physical deterioration that the driver itself cannot predict in advance or into a snoozing/sleeping state, and thus, the driver is unable to drive the host vehicle properly and/or safely.

Specifically, the CPU determines that the driver's anomaly state has been occurring (i.e., the CPU acquires information indicating that the driver has fallen into the anomaly state), when at least one of "a first anomaly state determination condition and a second anomaly determination condition" described below is satisfied. Note that the CPU may configured to determine either one of the first anomaly state determination condition and the second anomaly determination condition only, and determines that the driver's anomaly state has been occurring when that one of the conditions is satisfied.

### (First anomaly state determination condition)

The first anomaly state determination condition is a condition that is satisfied, when it is determined, based on the driver's information transmitted from the driver monitoring device 40, that the direction of the line of sight of the driver or the face direction of the driver coincides with a "direction in which it does not face while the driver is driving the host vehicle normally or properly" for an anomaly determination time threshold or longer.

### (Second anomaly state determination condition)

The second anomaly state determination condition is a condition that is satisfied, when it is determined that the emergency stop button 97 has been pushed and thus the emergency stop signal has been generated.

When at least one of "the first anomaly state determination condition and the second anomaly determination condition" is satisfied, the CPU determines that the driver's anomaly state has been occurring. In this case, the CPU makes a "Yes" determination at step 320 and proceeds to step 330 so as to set the value of the EDSS flag XEDSS to "1".

Subsequently, the CPU proceeds to step 340 to start the emergency stop control due to the EDSS. Thereafter, the CPU proceeds to step 395 to terminate the present routine tentatively. As a result, the host vehicle is basically gently/mildly decelerated (at a constant deceleration) until the host vehicle fully stops. Note that, when it is predicted that the host vehicle is likely to be fully stopped at an unpreferable position, the CPU lets the host vehicle travel at a constant speed, and then decelerate the host vehicle to fully stop the host vehicle after the host vehicle moves to a safer place.

This emergency stop control due to the EDSS has been well-known, and is disclosed in Japanese patents No. 7318595, 7315904, 7256475, 7226160, 7188212, 6772654, 6583183, 6489080, 6586930, 651688, 6443406, 6508137, 6497349, 6460349, and 6455456.

Whereas, if the emergency stop control due to the EDSS is currently being executed (i.e., when the value of the EDSS flag XEDSS is "1") when the CPU proceeds to step 310, the CPU makes a "No" determination at step 310, and proceeds to step 340. At step 340, the CPU continues the emergency stop control. Thereafter, the CPU proceeds to step 395 to terminate the present routine tentatively.

In addition, if neither the first anomaly state determination condition nor the second anomaly determination condition is satisfied when the CPU proceeds to step 320, the CPU determines that the driver's anomaly state has not been occurring. In this case, the CPU makes a "No" determination at step 320, and directly proceeds to step 395 so as to terminate the present routine tentatively.

### <<Collision avoidance assistance control of the first apparatus>>

When an appropriate time point comes, the CPU starts processing from step 400 in FIG. 4, and proceeds to step 410. At step 410, the CPU determines whether or not an obstacle is present in a predicted traveling area of the host vehicle. Specifically, firstly, the CPU obtains a vehicle predicted traveling path. The vehicle predicted traveling path is a future path of the host vehicle that is predicted to be taken by a center in the vehicle width direction of the front edge of the host vehicle over a given prediction period, assuming that the host vehicle maintains its current steering angle θ and the current vehicle speed Vh.

Subsequently, the CPU obtains a line that is obtained by shifting the vehicle predicted traveling path leftward in the vehicle width direction by "a distance d longer than a half of the vehicle width" as a left front edge moving path. The CPU also obtains a line that is obtained by shifting the vehicle predicted traveling path rightward in the vehicle width direction by the distance d as a right front edge moving path. The CPU predicts/obtains, as the predicted traveling area of the host vehicle, an area between the left front edge moving path and the right front edge moving path. The CPU determines whether or not an object (i.e., an obstacle) is present in the predicted traveling area of the host vehicle, based on the fusion object information. When the object is not present in the predicted traveling area of the host vehicle, the CPU makes "No" determination at step 410, and proceeds to step 495 to terminate the present routine tentatively.

Whereas, when the object (i.e., the obstacle) is present in the predicted traveling area of the host vehicle, the CPU makes a "Yes" determination at step 410, and proceeds to step 420. At step 420, the CPU determines whether or not the collision prediction condition that is satisfied when it is predicted that the host vehicle will collide with the obstacle is satisfied based on the fusion object information. Specifically, the CPU obtains through calculation, as a collision margin time TTC (i.e., time to collision TTC), a time length till a time point at which the host vehicle is predicted to collide with the obstacle, by dividing a distance between the obstacle and the host vehicle by the relative speed of the obstacle. Thereafter, the CPU determines whether or not the collision prediction condition is satisfied by determining whether or not the "collision margin time TTC" is equal to or shorter than a maximum collision determination threshold TthMax. The collision margin time TTC is a collision indication value (or a collision probability indication value) that correlates to a possibility that the host vehicle collides with the obstacle. The collision probability indication value may be a value that monotonically decreases or monotonically increases as the possibility that the host vehicle collides with the obstacle increases. Thus, for example, the collision probability indication value may be an inverse of the collision margin time TTC. The maximum collision determination threshold TthMax is the "maximum value of the collision determination threshold" that is set in such a manner that the timing at which the collision margin time TTC becomes equal to the maximum collision determination threshold TthMax is not earlier than the timing at which a normal driver starts driving operations in response to an obstacle.

When the collision prediction condition is not satisfied, the CPU makes a "No" determination at step 420, and proceeds to step 495 so as to terminate the present routine tentatively.

Whereas, when the "collision margin time TTC" is equal to or shorter than the maximum collision determination threshold TthMax, and therefore, the collision prediction condition is satisfied, the CPU makes a "Yes" determination at step 420, and proceeds to step 430. At step 430, the CPU determines whether or not the emergency stop control due to the EDSS is being executed. Namely, at step 430, the CPU determines whether or not the value of the EDSS flag XEDSS is "1".

When the emergency stop control due to the EDSS is not being executed (i.e., when the value of the EDSS flag XEDSS is not "1"), the CPU makes a "No" determination at step 430, and proceeds to step 440. At step 440, the CPU sets the collision determination threshold to a "standard collision determination threshold TthNormal" that is smaller than the maximum collision determination threshold TthMax. The standard collision determination threshold TthNormal may sometimes be referred to as a "first collision determination threshold", for convenience.

Subsequently, the CPU proceeds to step 450 to determine whether or not the collision margin time TTC is equal to or shorter than the collision determination threshold TTCth (which is, in this case, equal to the standard collision determination threshold TthNormal). Namely, at step 450, the CPU determines whether or not the execution condition for the collision avoidance assistance operation (i.e., the EDSS in-execution period first operation start condition) is satisfied.

When the collision margin time TTC is greater than the collision determination threshold TTCth (namely, when the execution condition for the collision avoidance assistance operation is not satisfied), the CPU makes a "No" determination at step 420, and proceeds to step 495 so as to terminate the present routine tentatively. Thus, in this case, the automatic braking is not started.

Whereas, when the collision margin time TTC is equal to or shorter than the collision determination threshold TTCth (namely, when the execution condition for the collision avoidance assistance operation is satisfied), the CPU makes a "Yes" determination at step 410, and proceeds to step 460 so as to start executing the automatic braking. Thereafter, the CPU proceeds to step 495 so as to terminate the present routine tentatively.

If the emergency stop control due to the EDSS is being executed (i.e., if the value of the EDSS flag XEDSS is "1") when the CPU proceeds to step 430, the CPU makes a "Yes" determination at step 430, and proceeds to step 470. At step 470, the CPU sets the collision determination threshold TTCth to an early collision determination threshold TthLarge. In this embodiment, the early collision determination threshold TthLarge is a value that is smaller than the maximum collision determination threshold TthMax and is greater than the standard collision determination threshold TthNormal (i.e., TthNormal<TthLarge≦TthMax). This causes the execution condition for the collision avoidance assistance operation used in the next step 450 to become a condition that is more easily satisfied (or is earlier satisfied) than when the emergency stop control due to the EDSS is not being executed. In other words, the process at step 470 sets "the EDSS execution period first operation start condition" to a condition that is earlier (or more easily) satisfied than "the EDSS in-execution period first operation start condition".

Note that the early collision determination threshold TthLarge may sometimes be referred to as a "second collision determination threshold". Therefore, the second collision determination threshold (i.e. the early collision determination threshold TthLarge) has been set to a value which the collision indication value (i.e., the collision margin time TTC) reaches earlier than a timing at which the collision indication value reaches the first collision determination threshold (i.e., the standard collision determination threshold TthNormal).

Next, the CPU proceeds to step 450 to determine whether or not the collision margin time TTC is equal to or shorter than the collision determination threshold (which is, in this case, the early collision determination threshold TthLarge). When the collision margin time TTC is greater than the collision determination threshold, the CPU directly proceeds to step 495 from step 450. Therefore, in this case, the automatic braking is not started.

Whereas, when the collision margin time TTC is equal to or shorter than the collision determination threshold (namely, when the execution condition for the collision avoidance assistance operation is satisfied), the CPU makes a "Yes" determination at step 450, and proceeds to step 460 so as to start executing the automatic braking as the collision avoidance assistance operation. Thereafter, the CPU proceeds to step 495 so as to terminate the present routine tentatively.

As has been described, when "the second control for automatically stopping the host vehicle fully that is executed when the driver of the host vehicle has fallen into the anomaly state" is being executed, the first apparatus starts "the first operation for decreasing the possibility of collision between the host vehicle and the obstacle (i.e., the automatic braking)" at an earlier timing (the timing that the TTC reaches the TthLarge) that is earlier than when the second control is not being executed. Accordingly, the first apparatus can avoid the collision between the host vehicle and the obstacle more certainly. In addition, according to the first apparatus, the automatic braking starts to be executed at an earlier timing during the execution of the second control, and therefore, a necessity that the host vehicle is rapidly decelerated by the automatic braking can be lowered. Therefore, during the execution of the second control, a possibility that a following vehicle suddenly comes close to the host vehicle due to the automatic braking applied to the host vehicle can be reduced.

### <Second embodiment>

A vehicle control apparatus according to a second embodiment of the present disclosure (hereinafter, referred to as a "second apparatus") gives a priority to the driving of the host vehicle by the driving operation of the driver (i.e., gives a priority to so called an override) by delaying the start of the execution of the collision avoidance assistance control, if an operation determination condition that is satisfied when the driving operation is carried out by the driver is satisfied, while the emergency stop control due to the EDSS is not being executed in a case where it determines that the collision prediction condition becomes satisfied. In addition, the second apparatus prohibits the override and starts executing the collision avoidance assistance control without delaying the execution of the collision avoidance assistance control regardless of whether or not the operation determination condition is satisfied (i.e., regardless of whether or not the driving operation by the driver is made), while the emergency stop control due to the EDSS is being executed in a case where it determines that the collision prediction condition becomes satisfied. The operation determination condition may sometimes be referred to as an override condition or an override control permission condition.

### (Specific operation)

The CPU of the vehicle control ECU 10 of the second apparatus is different from the CPU of the first apparatus only in that it executes a routine shown by a flowchart in FIG. 5 in place of FIG. 4, every time a predetermined time elapses. Hereinafter, this difference will be mainly described.

### <<Collision avoidance assistance control of the second apparatus>>

When an appropriate time point comes, the CPU starts processing from step 500 in FIG. 5, and proceeds to step 510. At step 510, the CPU determines whether or not the obstacle is present in the predicted traveling area of the host vehicle. The process of this step is the same as one of step 410.

When the obstacle is not present in the predicted traveling area of the host vehicle, the CPU makes a "No" determination at step 510, and directly proceeds to step 595 so as to terminate the present routine tentatively.

Whereas, when the obstacle is present in the predicted traveling area of the host vehicle, the CPU makes a "Yes" determination at step 510, and proceeds to step 520 to determine whether or not the collision prediction condition is satisfied based on the fusion object information. The process of this step is the same as one of step 420. Namely, the CPU determines whether or not the collision margin time TTC is equal to or shorter than the maximum collision determination threshold TthMax.

When the collision prediction condition is not satisfied, the CPU makes a "No" determination at step 520, and directly proceeds to step 595 so as to terminate the present routine tentatively.

Whereas, when the collision prediction condition is satisfied, the CPU makes a "Yes" determination at step 520, and proceeds to step 530. At step 530, the CPU determines whether or not the emergency stop control due to the EDSS is being executed. The process of this step is the same as one of step 430. Namely, at step 530, the CPU determines whether or not the value of the EDSS flag XEDSS is "1".

When the emergency stop control due to the EDSS is not being executed (namely, when the value of the EDSS flag XEDSS is not "1"), the CPU makes a "No" determination at step 530, and proceeds to step 540. At step 540, the CPU determines whether or not the operation determination condition (i.e., the override condition or the override control permission condition) is satisfied.

The operation determination condition is a condition that is satisfied, when at least one of "a condition A1 to a condition A3" described below is satisfied. Namely, the CPU determines that the operation determination condition is satisfied, when at least one of "the condition A1 to the condition A3" is satisfied.
Condition A1: 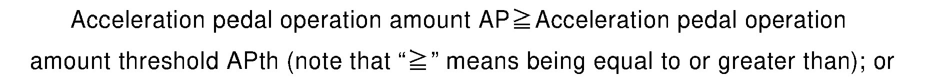 Acceleration pedal operation amount AP ≧ Acceleration pedal operation amount threshold APth (note that "≧" means being equal to or greater than);or 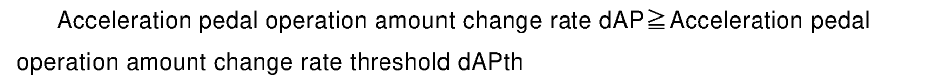 Acceleration pedal operation amount change rate dAP≧Acceleration pedal operation amount change rate threshold dAPth
Condition A2: 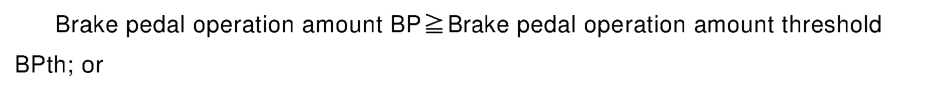 Brake pedal operation amount BP≧Brake pedal operation amount threshold BPth; or 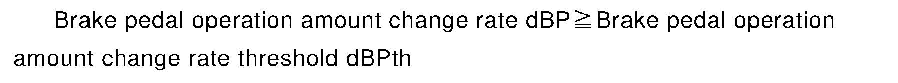 Brake pedal operation amount change rate dBP≧Brake pedal operation amount change rate threshold dBPth
Condition A3:$Magnitude of steering angle \left|θ\right| ≧ Steering angle threshold θ th ;$or 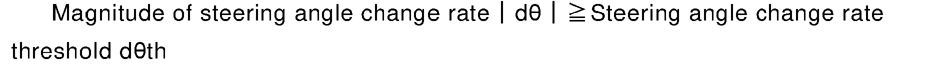 Magnitude of steering angle change rate | dθ | ≧ Steering angle change rate threshold dθth

Note that the acceleration pedal operation amount change rate dAP is a change amount in the acceleration pedal operation amount AP per unit time, the brake pedal operation amount change rate dBP is a change amount in the brake pedal operation amount BP per unit time, and the magnitude of steering angle change rate | dθ | is a magnitude (absolute value) of a change amount in the steering angle θ per unit time.

When the operation determination condition is satisfied (i.e., when at least one of the condition A1 to the condition A3 is satisfied), the CPU makes a "Yes" determination at step 540, and proceeds to step 550. At step 550, the CPU sets the collision determination threshold TTCth to "a delay collision determination threshold TthSmall" that is smaller than the maximum collision determination threshold TthMax. Note that, when the operation determination condition as described in step 540 is satisfied, and the collision determination threshold TTCth is set to a certain value as described in step 550, the collision determination threshold TTCth may not be changed until a collision determination threshold clear condition becomes satisfied. In such a case, the collision determination threshold clear condition is a condition that is satisfied, when the obstacle is no longer present, or when the automatic braking is started. This point is applicable to the other embodiments described later.

Subsequently, the CPU proceeds to step 560 to determine whether or not the collision margin time TTC is equal to or shorter than the collision determination threshold TTCth (in this case, that is the delay collision determination threshold TthSmall). Namely, at step 560, the CPU determines whether or not the execution condition for the collision avoidance assistance operation (i.e., the first operation start condition) is satisfied. The process of this step is the same as one of step 450.

When the collision margin time TTC is greater than the collision determination threshold TTCth (i.e., when the execution condition for the collision avoidance assistance operation is not satisfied), the CPU makes a "No" determination at step 560, and directly proceeds to step 595 so as to terminate the present routine tentatively. In this case, the automatic braking is not started.

Whereas, when the collision margin time TTC is equal to or shorter than the collision determination threshold TTCth (i.e., when the execution condition for the collision avoidance assistance operation is satisfied), the CPU makes a "Yes" determination at step 560, and proceeds to step 570 to start executing the automatic braking as the collision avoidance assistance operation. The process of this step is the same as one of step 460. Thereafter, the CPU proceeds to step 595 to terminate the present routine tentatively.

If the operation determination condition is not satisfied (i.e., when none of the condition A1 to the condition A3 is satisfied), the CPU makes a "No" determination at step 540, and proceeds to step 580. At step 580, the CPU sets the collision determination threshold TTCth to the standard collision determination threshold TthNormal. In this embodiment, the standard collision determination threshold TthNormal is greater than the delay collision determination threshold TthSmall and is equal to or smaller than the maximum collision determination threshold TthMax (i.e., TthSmall<TthNormal ≦ TthMax).

Thereafter, the CPU proceeds to step 560 to determine whether or not the collision margin time TTC is equal to or shorter than the collision determination threshold TTCth (in this case, the standard collision determination threshold TthNormal). When the collision margin time TTC is greater than the collision determination threshold TTCth, the CPU makes a "No" determination at step 560, and directly proceeds to step 595 so as to terminate the present routine tentatively. In this case, the automatic braking is not started.

Whereas, when the collision margin time TTC is equal to or shorter than the collision determination threshold TTCth (i.e., when the execution condition for the collision avoidance assistance operation is satisfied), the CPU makes a "Yes" determination at step 560, and proceeds to step 570 so as to start the automatic braking as the collision avoidance assistance operation. Thereafter, the CPU proceeds to step 595 to terminate the present routine tentatively.

If the emergency stop control due to the EDSS is being executed (i.e., if the value of the EDSS flag XEDSS is "1") when the CPU proceeds to step 530, the CPU makes a "Yes" determination at step 530, and proceeds to step 580. At step 580, the CPU sets the collision determination threshold TTCth to the standard collision determination threshold TthNormal, and proceeds to step 560. Therefore, when the collision margin time TTC is equal to or shorter than the maximum collision determination threshold TthMax, and thus the collision prediction condition is satisfied, regardless of whether or not the operation determination condition is satisfied, the automatic braking starts to be executed at a normal timing (i.e., at a timing at which the collision margin time TTC becomes equal to or shorter than the collision determination threshold TTCth that has been set to the standard collision determination threshold TthNormal) if the emergency stop control due to the EDSS is being executed.

As has been described, in a case where the emergency stop control that is the second control for automatically stopping the host vehicle fully is not being executed, the second apparatus delays starting the automatic braking that is the first operation when the operation determination condition that is satisfied when the driving operation elements is operated is satisfied as compared to when the operation determination condition is not satisfied. When the emergency stop control that is the second control is not being executed, there is a possibility that the driver tries to avoid the collision by operating the driving operation elements. In view of this, as described above, the second apparatus delays starting to execute the automatic braking that is the first operation. Therefore, the second apparatus can avoid an occurrence of a situation where the first operation, that intervenes early, obstructs a collision avoidance behavior by the operation of the driving operation elements.

Whereas, when the second control for automatically stopping the host vehicle (i.e., the emergency stop control) is being executed, the driver is highly unlikely to carry out the driving operation properly. In view of this, the second apparatus ignores such a driving operation and starts executing the first operation at an earlier timing (i.e., at a timing that is the same as a timing of when the second control is not being executed and the operation determination condition is not satisfied). Accordingly, the second apparatus can avoid the collision between the host vehicle and the obstacle more certainly. In addition, the first operation is the automatic braking, and the automatic braking starts to be executed from a relatively early timing, in a case where the second control is being executed. Thus, a necessity that the host vehicle is rapidly decelerated by the automatic braking can be lowered. Therefore, during the execution of the emergency stop control that is the second control, a possibility that a following vehicle suddenly comes close to the host vehicle due to the automatic braking that is the first operation applied to the host vehicle can be reduced.

### <Third embodiment>

A vehicle control apparatus according to a third embodiment of the present disclosure (hereinafter, referred to as a "third apparatus") sets the operation determination condition used while the emergency stop control due to the EDSS is being executed to a condition that is harder to be satisfied than one used while the emergency stop control due to the EDSS is not being executed, when it determines that the collision prediction condition is satisfied. Consequently, when it determines that the collision prediction condition is satisfied, a condition necessary to be satisfied in order to execute the collision avoidance assistance operation while the emergency stop control due to the EDSS is being executed (i.e., the EDSS execution period first operation start condition) is set to a condition different from a condition necessary to be satisfied in order to execute the collision avoidance assistance operation while the emergency stop control due to the EDSS is not being executed (i.e., the EDSS in-execution period first operation start condition).

### (Specific operation)

The CPU of the vehicle control ECU 10 of the third apparatus is different from the CPU of the first apparatus only in that it executes a routine shown by a flowchart in FIG. 6 in place of FIG. 4, every time a predetermined time elapses. Hereinafter, this difference will be mainly described.

### <<Collision avoidance assistance control of the third apparatus>>

When an appropriate time point comes, the CPU starts processing from step 600 in FIG. 6, and proceeds to step 605. At step 605, the CPU determines whether or not the obstacle is present in the predicted traveling area of the host vehicle. The process of this step is the same as one of step 410.

When the obstacle is not present in the predicted traveling area of the host vehicle, the CPU makes a "No" determination at step 605, and directly proceeds to step 695 so as to terminate the present routine tentatively.

Whereas, when the obstacle is present in the predicted traveling area of the host vehicle, the CPU makes a "Yes" determination at step 605, and proceeds to step 610 to determine whether or not the collision prediction condition is satisfied based on the fusion object information. The process of this step is the same as one of step 420. Namely, the CPU determines whether or not the collision margin time TTC is equal to or shorter than the maximum collision determination threshold TthMax.

When the collision margin time TTC is greater than the maximum collision determination threshold TthMax, the CPU makes a "No" determination at step 610, and directly proceeds to step 695 so as to terminate the present routine tentatively.

Whereas, when the collision margin time TTC is equal to or shorter than the maximum collision determination threshold TthMax, and thus, the collision prediction condition is satisfied, the CPU makes a "Yes" determination at step 610, and proceeds to step 615. At step 615, the CPU determines whether or not the emergency stop control due to the EDSS is being executed. The process of this step is the same as one of step 430. Namely, at step 615, the CPU determines whether or not the value of the EDSS flag XEDSS is "1".

When the emergency stop control due to the EDSS is not being executed (namely, when the value of the EDSS flag XEDSS is not "1"), the CPU makes a "No" determination at step 615, and proceeds to step 620.

At step 620, the CPU executes processes described below.

The CPU sets the acceleration pedal operation amount threshold APth to a normal (EDSS in-execution) acceleration pedal operation amount threshold APthNormal (i.e., an acceleration pedal operation amount threshold APth during the second control is not being executed).

The CPU sets the acceleration pedal operation amount change rate threshold dAPth to a normal acceleration pedal operation amount change rate threshold dAPthNormal.

The CPU sets the brake pedal operation amount threshold BPth to a normal brake pedal operation amount threshold BPthNormal.

The CPU sets the brake pedal operation amount change rate threshold dBPth to a normal brake pedal operation amount change rate threshold dBPthNormal.

The CPU sets the steering angle threshold θth to a normal steering angle threshold θthNormal.

The CPU sets the steering angle change rate threshold dθth to a normal steering angle change rate threshold dθthNormal.

The operation determination condition using the thresholds set in step 620 (refer to step 625) is referred to as "a second control in-execution period operation determination condition" or "an EDSS in-execution period operation determination condition".

Subsequently, the CPU proceeds to step 625 to determine whether or not the above-described operation determination condition (i.e., the override condition or the override control permission condition) is satisfied. Namely, the CPU determines whether or not at least one of "the condition A1 to the condition A3" described above is satisfied. The process of this step is the same as one of step 540.

When the operation determination condition is satisfied (i.e., when at least one of the condition A1 to the condition A3 is satisfied), the CPU makes a "Yes" determination at step 625, and proceeds to step 630. At step 630, the CPU sets the collision determination threshold TTCth to "the delay collision determination threshold TthSmall" that is smaller than the maximum collision determination threshold TthMax. The process of this step is the same as one of step 550. The delay collision determination threshold TthSmall may be referred to as a third collision determination threshold.

Subsequently, the CPU proceeds to step 635 to determine whether or not the collision margin time TTC is equal to or shorter than the collision determination threshold TTCth (in this case, that is the delay collision determination threshold TthSmall). Namely, at step 635, the CPU determines whether or not the execution condition for the collision avoidance assistance operation (i.e., the first operation start condition) is satisfied. The process of this step is the same as one of step 450.

When the collision margin time TTC is greater than the collision determination threshold TTCth (i.e., when the execution condition for the collision avoidance assistance operation is not satisfied), the CPU makes a "No" determination at step 635, and directly proceeds to step 695 so as to terminate the present routine tentatively. In this case, the automatic braking is not started.

Whereas, when the collision margin time TTC is equal to or shorter than the collision determination threshold TTCth (i.e., when the execution condition for the collision avoidance assistance operation is satisfied), the CPU makes a "Yes" determination at step 635, and proceeds to step 640 to start executing the automatic braking as the collision avoidance assistance operation. The process of this step is the same as one of step 460. Thereafter, the CPU proceeds to step 695 to terminate the present routine tentatively.

If the operation determination condition is not satisfied (i.e., when none of the condition A1 to the condition A3 is satisfied), the CPU makes a "No" determination at step 625, and proceeds to step 645. At step 645, the CPU sets the collision determination threshold TTCth to the above-described standard collision determination threshold TthNormal. The standard collision determination threshold TthNormal is greater than the delay collision determination threshold TthSmall and is smaller than the maximum collision determination threshold TthMax (i.e., TthSmall<TthNormal<TthMax). The standard collision determination threshold TthNormal is referred to as a first collision determination threshold.

Thereafter, the CPU proceeds to step 635 to determine whether or not the collision margin time TTC is equal to or shorter than the collision determination threshold TTCth (in this case, the standard collision determination threshold TthNormal). When the collision margin time TTC is greater than the collision determination threshold TTCth, the CPU makes a "No" determination at step 635, and directly proceeds to step 695 so as to terminate the present routine tentatively. In this case, the automatic braking is not started.

Whereas, when the collision margin time TTC is equal to or shorter than the collision determination threshold TTCth (i.e., when the execution condition for the collision avoidance assistance operation is satisfied), the CPU makes a "Yes" determination at step 635, and proceeds to step 640 so as to start the automatic braking as the collision avoidance assistance operation. Thereafter, the CPU proceeds to step 695 to terminate the present routine tentatively.

If the emergency stop control due to the EDSS is being executed (i.e., if the value of the EDSS flag XEDSS is "1") when the CPU proceeds to step 615, the CPU makes a "Yes" determination at step 615, and proceeds to step 650.

The CPU executes process described below at step 650.

The CPU sets the acceleration pedal operation amount threshold APth to an EDSS execution period acceleration pedal operation amount threshold APthLarge greater than the normal acceleration pedal operation amount threshold APthNormal.

The CPU sets the acceleration pedal operation amount change rate threshold dAPth to an EDSS execution period acceleration pedal operation amount change rate threshold dAPthLarge greater than the normal acceleration pedal operation amount change rate threshold dAPthNormal.

The CPU sets the brake pedal operation amount threshold BPth to an EDSS execution period brake pedal operation amount threshold BPthLarge greater than the normal brake pedal operation amount threshold BPthNormal.

The CPU sets the brake pedal operation amount change rate threshold dBPth to an EDSS execution period brake pedal operation amount change rate threshold dBPthLarge greater than the normal brake pedal operation amount change rate threshold dBPthNormal.

The CPU sets the steering angle threshold θth to an EDSS execution period steering angle threshold θthLarge greater than the normal steering angle threshold θthNormal.

The CPU sets the steering angle change rate threshold dθth to an EDSS execution period steering angle change rate threshold dθthLarge greater than the normal steering angle change rate threshold dθthNormal.

The operation determination condition using the thresholds set in step 650 (refer to step 625) is referred to as "a second control execution period operation determination condition" or "an EDSS execution period operation determination condition". In this manner, the second control execution period operation determination condition is set in such a manner that it is satisfied when the driver operates the driving operation elements more quickly or more greatly, as compared to the second control in-execution period operation determination condition that is set at step 620.

Thereafter, the CPU proceeds to step 625. Therefore, the operation determination condition used while the emergency stop control due to the EDSS is being executed is set to a condition that is harder to be satisfied than one used while the emergency stop control due to the EDSS is not being executed. Consequently, when it determines that the collision prediction condition is satisfied, a condition necessary to be satisfied in order to execute the collision avoidance assistance operation while the emergency stop control due to the EDSS is being executed (i.e., the EDSS execution period first operation start condition) is set to a condition different from a condition necessary to be satisfied in order to execute the collision avoidance assistance operation while the emergency stop control due to the EDSS is not being executed (i.e., the EDSS in-execution period first operation start condition).

As has been described, according to the third apparatus, the operation determination condition while the second control (the emergency stop control) is being executed (i.e., the second control execution period operation determination condition) is set in such a manner that it is satisfied when the driver operates the driving operation elements more quickly or more greatly, as compared to the operation determination condition while the second control is not being executed (i.e., the second control in-execution period operation determination condition). Accordingly, when it is likely that the driver has fallen into the anomaly state (i.e., during the second control is being executed), the collision avoidance operation by the driver's driving operation (i.e., the override control) is permitted only if a clearer (or more certain) driving operation is detected. Therefore, it is possible to reduce the possibility that the host vehicle is driven based on the erroneous operation made to the driving operation elements.

### <Fourth embodiment>

A vehicle control apparatus according to a fourth embodiment of the present disclosure (hereinafter, referred to as a "fourth apparatus") sets the execution condition for the collision avoidance assistance operation while the emergency stop control due to the EDSS is being executed to a condition that can be satisfied earlier as compared to the execution condition for the collision avoidance assistance operation while the emergency stop control due to the EDSS is not being executed, when the operation determination condition becomes satisfied in the case where it is determined that the collision prediction condition is satisfied. Consequently, when it determines that the collision prediction condition is satisfied, a condition necessary to be satisfied in order to execute the collision avoidance assistance operation while the emergency stop control due to the EDSS is being executed (i.e., the EDSS execution period first operation start condition) is set to a condition different from a condition necessary to be satisfied in order to execute the collision avoidance assistance operation while the emergency stop control due to the EDSS is not being executed (i.e., the EDSS in-execution period first operation start condition).

### (Specific operation)

The CPU of the vehicle control ECU 10 of the fourth apparatus is different from the CPU of the first apparatus only in that it executes a routine shown by a flowchart in FIG. 7 in place of FIG. 4, every time a predetermined time elapses. Hereinafter, this difference will be mainly described.

### <<Collision avoidance assistance control of the fourth apparatus>>

When an appropriate time point comes, the CPU starts processing from step 700 in FIG. 7, and proceeds to step 710. At step 710, the CPU determines whether or not the obstacle is present in the predicted traveling area of the host vehicle. The process of this step is the same as one of step 410.

When the obstacle is not present in the predicted traveling area of the host vehicle, the CPU makes a "No" determination at step 710, and directly proceeds to step 795 so as to terminate the present routine tentatively.

Whereas, when the obstacle is present in the predicted traveling area of the host vehicle, the CPU makes a "Yes" determination at step 710, and proceeds to step 720 to determine whether or not the collision prediction condition is satisfied based on the fusion object information. The process of this step is the same as one of step 420. Namely, the CPU determines whether or not the collision margin time TTC is equal to or shorter than the maximum collision determination threshold TthMax.

When the collision margin time TTC is greater than the maximum collision determination threshold TthMax, the CPU makes a "No" determination at step 720, and directly proceeds to step 795 so as to terminate the present routine tentatively.

Whereas, when the collision margin time TTC is equal to or shorter than the maximum collision determination threshold TthMax, and thus, the collision prediction condition is satisfied, the CPU makes a "Yes" determination at step 720, and proceeds to step 730. At step 730, the CPU determines whether or not the above-described operation determination condition (i.e., the override control permission condition) is satisfied. Namely, the CPU determines whether or not at least one of "the condition A1 to the condition A3" described above is satisfied. The process of this step is the same as one of step 540.

When the operation determination condition is not satisfied (i.e., when none of the condition A1 to the condition A3 is satisfied), the CPU makes a "No" determination at step 730, and proceeds to step 740. At step 740, the CPU sets the collision determination threshold TTCth to the above-described standard collision determination threshold TthNormal. The standard collision determination threshold TthNormal is smaller than the maximum collision determination threshold TthMax (i.e., TthNormal<TthMax). The standard collision determination threshold TthNormal is referred to as the first collision determination threshold.

In this manner, in the present embodiment, the operation determination condition when the emergency stop control due to the EDSS is not being executed (second control in-execution period operation determination condition) and the operation determination condition when the emergency stop control due to the EDSS is being executed (second control execution period operation determination condition) are both determined at step 730 in FIG. 7. When the operation determination condition is not satisfied (step 730: No), the first operation start condition is a condition that is satisfied when the collision indication value reaches the first collision determination threshold (step 740, step 750), regardless of whether or not the emergency stop control due to the EDSS (i.e., the second control) is being executed. In other words, the CPU may execute, between step 730 and step 740, a process to determine whether or not the emergency stop control due to the EDSS is being executed, however, in this case, the CPU proceeds to step 740 in both of a case where the emergency stop control due to the EDSS is being executed and a case where the emergency stop control due to the EDSS is not being executed.

Subsequently, the CPU proceeds to step 750 to determine whether or not the collision margin time TTC is equal to or shorter than the collision determination threshold TTCth (in this case, the standard collision determination threshold TthNormal). Namely, at step 750, the CPU determines whether or not the execution condition for the collision avoidance assistance operation (i.e., the first operation start condition) is satisfied. The process of this step is the same as one of step 450.

When the collision determination threshold TTCth is greater than the collision determination threshold TTCth (i.e. when the execution condition for the collision avoidance assistance operation is not satisfied), the CPU makes a "No" determination at step 750, and directly proceeds to step 795 so as to terminate the present routine tentatively. In this case, the automatic braking is not started.

Whereas, when the collision margin time TTC is equal to or shorter than the collision determination threshold TTCth (i.e., when the execution condition for the collision avoidance assistance operation is satisfied), the CPU makes a "Yes" determination at step 750, and proceeds to step 760 so as to start the automatic braking as the collision avoidance assistance operation. The process of this step is the same as one of step 460. Thereafter, the CPU proceeds to step 795 to terminate the present routine tentatively.

If the operation determination condition is satisfied (i.e., when at least one of the condition A1 to the condition A3 is satisfied) when the CPU proceeds to step 730, the CPU makes a "Yes" determination at step 730, and proceeds to step 770. At step 770, the CPU determines whether or not the emergency stop control due to the EDSS is being executed. The process of this step is the same as one of step 430. Namely, at step 770, the CPU determines whether or not the value of the EDSS flag XEDSS is "1".

When the emergency stop control due to the EDSS is not being executed (i.e., when the value of the EDSS flag XEDSS is not "1"), the CPU makes a "No" determination at step 770, and proceeds to step 780. At step 780, the CPU sets the collision determination threshold TTCth to the "delay collision determination threshold TthSmall" smaller than the standard collision determination threshold TthNormal. The process of this step is the same as one of step 550. The delay collision determination threshold TthSmall may be referred to as a third collision determination threshold. Note that, in this embodiment, the standard collision determination threshold TthNormal is equal to or smaller than the maximum collision determination threshold TthMax (i.e., TthNormal≦ TthMax).

Thereafter, the CPU proceeds to step 750. When the collision margin time TTC is equal to or shorter than the collision determination threshold TTCth (in this case, the delay collision determination threshold TthSmall), the CPU proceeds to step 760. At step 760, the CPU starts executing the automatic braking as the collision avoidance assistance operation. Thereafter, the CPU proceeds to step 795 so as to terminate the present routine tentatively.

Whereas, if the emergency stop control due to the EDSS is being executed (i.e., if the value of the EDSS flag XEDSS is "1") when the CPU proceeds to step 770, the CPU makes a "Yes" determination at step 770, and proceeds to step 790. At step 790, the CPU sets the collision determination threshold TTCth to an intermediate delay collision determination threshold TthMidSmall. The intermediate delay collision determination threshold TthMidSmall is smaller than the normal collision determination threshold TthNormal and is greater than the delay collision determination threshold TthSmall. The intermediate delay collision determination threshold TthMidSmall may be referred to as a fourth collision determination threshold.

Thereafter, the CPU proceeds to step 750. When the collision margin time TTC is equal to or shorter than the collision determination threshold TTCth (in this case, the intermediate delay collision determination threshold TthMidSmall), the CPU proceeds to step 760. At step 760, the CPU starts executing the automatic braking as the collision avoidance assistance operation. Thereafter, the CPU proceeds to step 795 so as to terminate the present routine tentatively.

As has been described, according to the fourth apparatus, in the case where the operation determination condition is satisfied, the execution start timing of the first operation becomes earlier when the second control is being executed (i.e., when the emergency stop control is being executed), as compared to when the second control is not being executed. It should be noted that, according to the fourth apparatus, the execution start timing of the first operation is delayed when the operation determination condition is satisfied as compared to when the operation determination condition is not satisfied, in both of a case where the second control is being executed and a case where the second control is not being executed.

Therefore, when the driving operation element is operated while the second control is being executed, although the driver's collision avoidance operation based on the operation of the driving operation elements is permitted tentatively, the first operation is started relatively earlier, as compared to (than) when the driving operation element is operated while the second control is not being executed. This can reduce the possibility that the host vehicle collides with the obstacle while the second control is being executed. In addition, since the automatic braking that is the first operation is started relatively earlier while the second control is being executed, the necessity to rapidly decelerate the host vehicle by the automatic braking in order to avoid the collision is reduced. Therefore, since the host vehicle is not rapidly decelerated by the automatic braking during the execution of the second control, the possibility that a following vehicle suddenly comes close to the host vehicle due to the automatic braking applied to the host vehicle can be reduced.

It should be noted that the CPU of the fourth apparatus may be configured to execute a step whose process is the same as one at step 615 in FIG. 6 when the CPU makes a "Yes" determination at step 720. In this case, when the CPU makes a "Yes" determination at that step whose process is the same as one at step 615, the CPU proceeds to step 730 in FIG. 7, after executing the same process as one at step 650 in FIG. 6. Also, in this case, when the CPU makes a "No" determination at that step whose process is the same as one at step 615, the CPU proceeds to step 730 in FIG. 7, after executing the same process as one at step 620 in FIG. 6. In this manner, in the fourth apparatus as well, the EDSS execution period operation determination condition may be set in such a manner that it is satisfied when the driver operates the driving operation elements more quickly or more greatly, as compared to the EDSS in-execution period operation determination condition.

### <Fifth embodiment>

A vehicle control apparatus according to a fifth embodiment of the present disclosure (hereinafter, referred to as a "fifth apparatus") sets the override determination condition (i.e., the operation determination condition) while the emergency stop control due to the EDSS is being executed to a condition that is harder to be satisfied, as compared to (than) the override determination condition while the emergency stop control due to the EDSS is not being executed, when it is determined that the collision prediction condition is satisfied. Consequently, when the fifth apparatus determines that the collision prediction condition is satisfied, a condition necessary to be satisfied in order to execute the collision avoidance assistance operation while the emergency stop control due to the EDSS is being executed (i.e., the EDSS execution period first operation start condition) is set to a condition different from a condition necessary to be satisfied in order to execute the collision avoidance assistance operation while the emergency stop control due to the EDSS is not being executed (i.e., the EDSS in-execution period first operation start condition). Note that the fifth apparatus prohibits/cancels the automatic braking when the override determination condition becomes satisfied.

### (Specific operation)

The CPU of the vehicle control ECU 10 of the fifth apparatus is different from the CPU of the first apparatus only in that it executes a routine shown by a flowchart in FIG. 8 in place of FIG. 4, every time a predetermined time elapses. Hereinafter, this difference will be mainly described.

### <<Collision avoidance assistance control of the fifth apparatus>>

When an appropriate time point comes, the CPU starts processing from step 800 in FIG. 8, and proceeds to step 805. At step 805, the CPU determines whether or not the obstacle is present in the predicted traveling area of the host vehicle. The process of this step is the same as one of step 410.

When the obstacle is not present in the predicted traveling area of the host vehicle, the CPU makes a "No" determination at step 805, and directly proceeds to step 895 so as to terminate the present routine tentatively.

Whereas, when the obstacle is present in the predicted traveling area of the host vehicle, the CPU makes a "Yes" determination at step 805, and proceeds to step 810 to determine whether or not the emergency stop control due to the EDSS is being performed. The process of this step is the same as one of step 430. Namely, the CPU determines whether or not the value of the EDSS flag XEDSS is "1".

When the emergency stop control due to the EDSS is not being executed (i.e., when the value of the EDSS flag XEDSS is not "1"), the CPU makes a "No" determination at step 810, and proceeds to step 815. At step 815, the CPU determines whether or not an EDSS in-execution period (normal period) first collision prediction condition is satisfied. Namely, the CPU determines whether or not the collision margin time TTC is equal to or shorter than an EDSS in-execution period (normal period) collision determination threshold TTCthS. The EDSS in-execution period collision determination threshold TTCthS may be referred to as a second control in-execution period collision determination threshold.

When the collision margin time TTC is greater than the EDSS in-execution period (normal period) collision determination threshold TTCthS, the CPU makes a "No" determination at step 815, and proceeds to step 895 so as to terminate the present routine tentatively.

Whereas, when the collision margin time TTC is equal to or shorter than the EDSS in-execution period (normal period) collision determination threshold TTCthS, and thus, the EDSS in-execution (normal) period collision prediction condition is satisfied, the CPU makes a "Yes" determination at step 815, and proceeds to step 820. At step 820, the CPU makes an EDSS in-execution (normal) period override determination. Specifically, in step 820, a determination as to whether or not an override condition (i.e., an operation determination condition) set for the EDSS in-execution (normal) period is satisfied is made in accordance with the sub-routine shown in FIG. 9.

More specifically, when the CPU proceeds to step 820, the CPU starts processing from step 900 in FIG. 9, and proceeds to step 910. At step 910, the CPU determines whether or not the EDSS in-execution period override condition (that may be referred as an "normal period override condition" or an "EDSS in-execution period operation determination condition") is satisfied.

The EDSS in-execution period override condition is a condition that is satisfied, when at least one of "a condition B1 to a condition B3" described below is satisfied. Namely, the CPU determines that the EDSS in-execution period override condition is satisfied, when at least one of the condition B1 to the condition B3 is satisfied.
Condition B1: 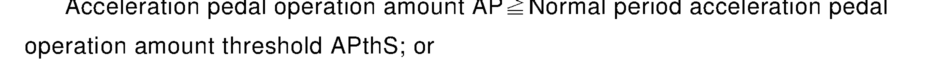 Acceleration pedal operation amount AP ≧ Normal period acceleration pedal operation amount threshold APthS; or 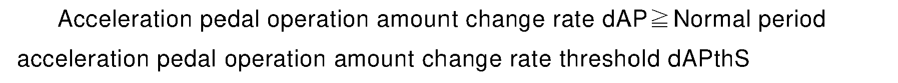 Acceleration pedal operation amount change rate dAP ≧ Normal period acceleration pedal operation amount change rate threshold dAPthS
Condition B2: 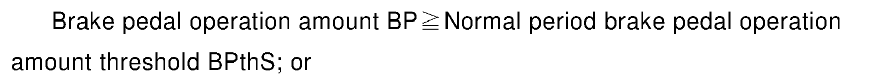 Brake pedal operation amount BP ≧ Normal period brake pedal operation amount threshold BPthS;or 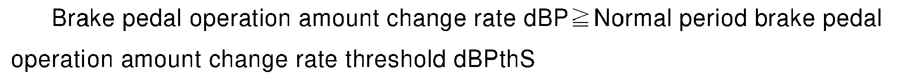 Brake pedal operation amount change rate dBP ≧ Normal period brake pedal operation amount change rate threshold dBPthS
Condition B3: 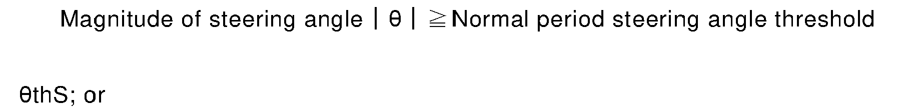 Magnitude of steering angle | θ | ≧ Normal period steering angle thresholdθthS; θthS; or 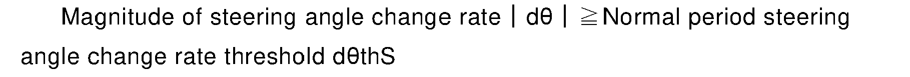 Magnitude of steering angle change rate | dθ | ≧ Normal period steering angle change rate threshold dθthS

It should be noted that a relationship between each threshold used in the conditions B1 to B3 and each threshold used at step 620 is as follows. However, this relationship does not necessarily have to be satisfied.
Normal period acceleration pedal operation amount threshold APthS=APthNormal
Normal period acceleration pedal operation amount change rate threshold dAPthS=dAPthNormal
Normal period brake pedal operation amount threshold BPthS=BPthNormal
Normal period brake pedal operation amount change rate threshold dBPthS=dBPthNormal
Normal period steering angle threshold θthS=θthNormal
Normal period steering angle change rate threshold dθthS=dθthNormal

When the EDSS in-execution period override condition is not satisfied (i.e., when none of the condition B1 to the condition B3 is satisfied), the CPU makes a "No" determination at step 910, and proceeds to step 920. At step 920, the CPU sets a value of a normal OR flag (i.e., an EDSS in-execution period override flag) XNOR to "0". Thereafter, the CPU proceeds to step 995 to terminate the present routine tentatively, and proceeds to step 825 shown in FIG. 8.

Whereas, when the EDSS in-execution period override condition is satisfied (i.e., when at least one of the condition B1 to the condition B3 is satisfied), the CPU makes a "Yes" determination at step 910, and proceeds to step 930. At step 930, the CPU sets the value of the normal OR flag (i.e., the EDSS in-execution period override flag) XNOR to "1". Thereafter, the CPU proceeds to step 995 to terminate the present routine tentatively, and proceeds to step 825 shown in FIG. 8.

At step 825, the CPU determines whether or not the value of the normal OR flag XNOR is "0".

When the value of the normal OR flag XNOR is "0", the CPU makes a "Yes" determination at step 825, and proceeds to step 830 so as to start the automatic braking as the collision avoidance assistance operation. Thereafter, the CPU proceeds to step 895 to terminate the present routine tentatively.

Whereas, when the value of the normal OR flag XNOR is "1", the CPU makes a "No" determination at step 825, and proceeds to step 835 so as to prohibit (cancel) the automatic braking and permit the override. Namely, the CPU controls the host vehicle in accordance with the driver's driving operation. Thereafter, the CPU proceeds to step 895 to terminate the present routine tentatively.

If the emergency stop control due to the EDSS is being performed (i.e., when the value of the EDSS flag XEDSS is "1") when the CPU proceeds to step 810, the CPU makes a "Yes" determination at step 810, and proceeds to step 840. At step 840, the CPU determines whether or not an EDSS execution period collision prediction condition is satisfied. Namely, the CPU determines whether or not the collision margin time TTC is equal to or smaller than an EDSS execution period collision determination threshold TTCthL. The EDSS execution period collision determination threshold TTCthL is set to a value greater than the EDSS in-execution period collision determination threshold TTCthS. Note that the EDSS execution period collision determination threshold TTCthL may be set to a value equal to the EDSS in-execution period collision determination threshold TTCthS. The EDSS execution period collision determination threshold TTCthL may be referred to as a second control execution period collision determination threshold.

When the collision margin time TTC is greater than the EDSS execution period collision determination threshold TTCthL, the CPU makes a "No" determination at step 840, and proceeds to step 895 to terminate the present routine tentatively.

Whereas, when the collision margin time TTC is equal to or smaller than the EDSS execution period collision determination threshold TTCthL, and thus, the EDSS execution period collision prediction condition is satisfied, the CPU makes a "Yes" determination at step 840, and proceeds to step 845. At step 845, the CPU executes an EDSS execution period override determination. Specifically, in step 845, a determination as to whether or not an override condition (i.e., an operation determination condition) set for the EDSS execution period is satisfied is made in accordance with the sub-routine shown in FIG. 10.

More specifically, when the CPU proceeds to step 845, the CPU starts processing from step 1000 in FIG. 10, and proceeds to step 1010. At step 1010, the CPU determines whether or not the EDSS execution period override condition (that may be referred as an "emergency stop control execution period override condition" or an "EDSS execution period operation determination condition") is satisfied.

The EDSS execution period override condition is a condition that is satisfied, when at least one of "a condition C1 to a condition C3" described below is satisfied. Namely, the CPU determines that the EDSS execution period override condition is satisfied, when at least one of the condition C1 to the condition C3 is satisfied.
Condition C1: 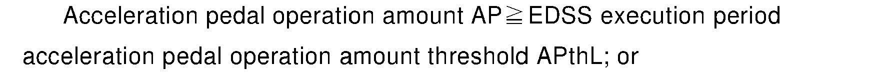 Acceleration pedal operation amount AP ≧ EDSS execution period acceleration pedal operation amount threshold APthL;or 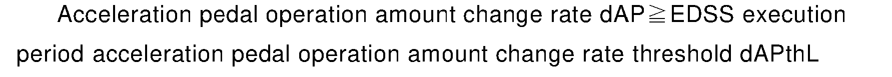 Acceleration pedal operation amount change rate dAP ≧ EDSS execution period acceleration pedal operation amount change rate threshold dAPthL
Condition C2: 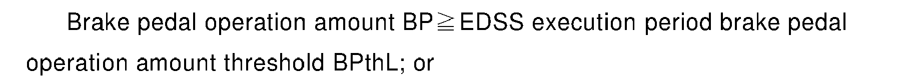 Brake pedal operation amount BP ≧ EDSS execution period brake pedal operation amount threshold BPthL;or 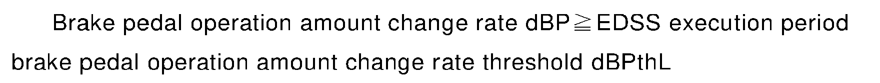 Brake pedal operation amount change rate dBP ≧ EDSS execution period brake pedal operation amount change rate threshold dBPthL
Condition C3: 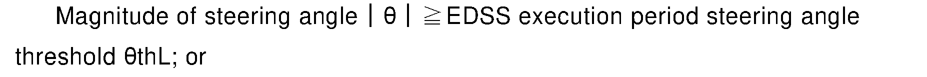 Magnitude of steering angle | θ | ≧ EDSS execution period steering angle threshold θthL;or 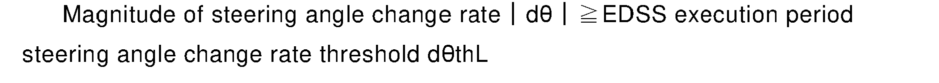 Magnitude of steering angle change rate | dθ | ≧EDSS execution period steering angle change rate threshold dθthL

It should be noted that a relationship between each threshold used in the conditions C1 to C3 and each threshold used in the conditions B1 to B3 is as follows. 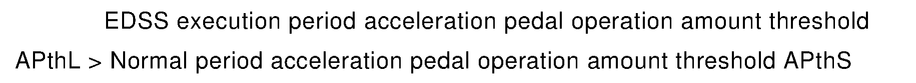 EDSS execution period acceleration pedal operation amount threshold APthL > Normal period acceleration pedal operation amount threshold APthS 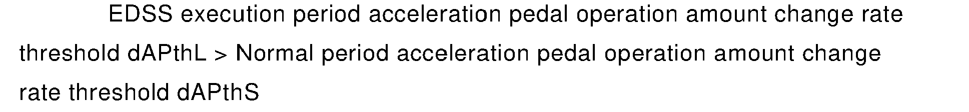 EDSS execution period acceleration pedal operation amount change rate threshold dAPthL > Normal period acceleration pedal operation amount change rate threshold dAPthS 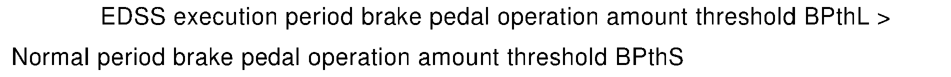 EDSS execution period brake pedal operation amount threshold BPthL > Normal period brake pedal operation amount threshold BPthS 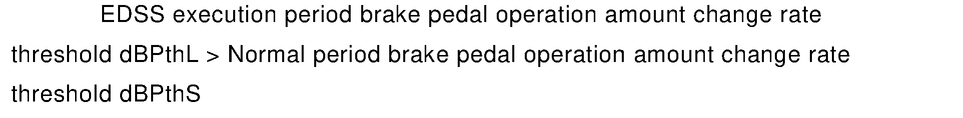 EDSS execution period brake pedal operation amount change rate threshold dBPthL > Normal period brake pedal operation amount change rate threshold dBPthS 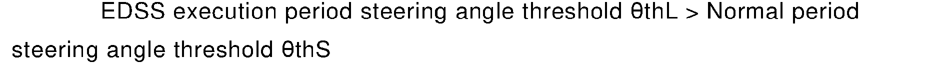 EDSS execution period steering angle threshold θthL > Normal period steering angle threshold θthS 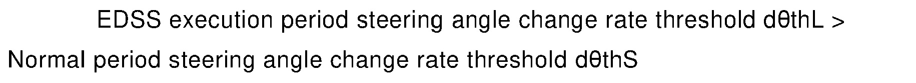 EDSS execution period steering angle change rate threshold dθthL > Normal period steering angle change rate threshold dθthS

Note that a relationship between each threshold used in the conditions C1 to C3 and each threshold used at step 650 is as follows. However, this relationship does not necessarily have to be satisfied.
EDSS execution period acceleration pedal operation amount change rate threshold dAPthL=APthLarge
EDSS execution period acceleration pedal operation amount change rate threshold dAPthL=dAPthLarge
EDSS execution period brake pedal operation amount threshold BPthL=BPthLarge
EDSS execution period brake pedal operation amount change rate threshold dBPthL=dBPthLarge
EDSS execution period steering angle threshold θthL=θthLarge
EDSS execution period steering angle change rate threshold dθth L=dθth Large

When the EDSS execution period override condition is not satisfied (i.e., when none of the condition C1 to the condition C3 is satisfied), the CPU makes a "No" determination at step 1010, and proceeds to step 1020. At step 1020, the CPU sets a value of an EDSS OR flag (i.e., an EDSS execution period override flag) XEOR to "0". Thereafter, the CPU proceeds to step 1095 to terminate the present routine tentatively, and proceeds to step 850 shown in FIG. 8.

Whereas, when the EDSS execution period override condition is satisfied (i.e., when at least one of the condition C1 to the condition C3 is satisfied), the CPU makes a "Yes" determination at step 1010, and proceeds to step 1030. At step 1030, the CPU sets the value of the EDSS OR flag (i.e., the EDSS execution period override flag) XEOR to "1". Thereafter, the CPU proceeds to step 1095 to terminate the present routine tentatively, and proceeds to step 850 shown in FIG. 8.

At step 850, the CPU determines whether or not the value of the EDSS OR flag XEOR is "0".

When the value of the EDSS OR flag XEOR is "0", the CPU makes a "Yes" determination at step 850, and proceeds to step 855 so as to start the automatic braking as the collision avoidance assistance operation. Thereafter, the CPU proceeds to step 895 to terminate the present routine tentatively.

Whereas, when the value of the EDSS OR flag XEOR is "1", the CPU makes a "No" determination at step 850, and proceeds to step 860 so as to prohibit (cancel) the automatic braking and permit the override. Namely, the CPU controls the host vehicle in accordance with the driver's driving operation. Thereafter, the CPU proceeds to step 895 to terminate the present routine tentatively.

As has been described, according to the fifth apparatus, in the second control execution period (i.e., while the emergency stop control is being executed), whether or not the second control execution period operation determination condition is satisfied is determined from an earlier timing (i.e., a timing at which the collision indication value (TTC) reaches the second control execution period collision determination threshold TTCthL), and the first operation can be started based on the determination result. Accordingly, the fifth apparatus can avoid the collision between the host vehicle and the obstacle more certainly. In addition, according to the fifth apparatus, the first operation is the automatic braking, and the automatic braking is started relatively earlier when the second control is being executed, a necessity that the host vehicle is rapidly decelerated by the automatic braking is low. Therefore, a possibility that a following vehicle suddenly comes close to the host vehicle due to the automatic braking that is the first operation applied to the host vehicle can be reduced.

In addition, according to the fifth apparatus, the second control execution period operation determination condition (i.e., the EDSS execution period override condition) is set to a condition that is satisfied when the driver operates the driving operation elements more quickly or more greatly, as compared to the second control in-execution period operation determination condition (i.e., the EDSS in-execution period override condition). Accordingly, when it is likely that the driver has fallen into the anomaly state (i.e., during the second control is being executed), the driver's collision avoidance operation is permitted only if a clearer (or more certain) driving operation is detected.

### <Sixth embodiment>

A vehicle control apparatus according to a sixth embodiment of the present disclosure (hereinafter, referred to as a "sixth apparatus") sets the override determination condition (i.e., the operation determination condition) while the emergency stop control due to the EDSS is being executed to a condition that is different from the override determination condition while the emergency stop control due to the EDSS is not being executed, when it is determined that the collision prediction condition is satisfied. Specifically, when it is determined that the collision prediction condition is satisfied, the sixth apparatus changes the override determination condition (i.e., the operation determination condition) while the emergency stop control due to the EDSS is being executed to a condition that is satisfied when the driver's collision avoidance operation is more likely to be a driving operation to avoid the collision. Consequently, when it is determined that the collision prediction condition is satisfied, a condition necessary to be satisfied in order to execute the collision avoidance assistance operation while the emergency stop control due to the EDSS is being executed (i.e., the EDSS execution period first operation start condition) is set to a condition different from a condition necessary to be satisfied in order to execute the collision avoidance assistance operation while the emergency stop control due to the EDSS is not being executed (i.e., the EDSS in-execution period first operation start condition). Note that, similarly to the fifth apparatus, the sixth apparatus prohibits/cancels the automatic braking when the override determination condition becomes satisfied.

### (Specific operation)

The CPU of the vehicle control ECU 10 of the sixth apparatus executes the routine shown by the flowchart in FIG. 8, every time a predetermined time elapses, similarly to the fifth apparatus. However, the CPU of the sixth apparatus is different from the CPU of the fifth apparatus only in that it executes a subroutine shown in FIG. 11 in place of FIG. 10 at step 845 shown in FIG. 8. Hereinafter, this difference will be mainly described.

When the CPU proceeds to step 845, it executes the EDSS execution period override determination. Specifically, in step 845, a determination as to whether or not an override condition (i.e., an operation determination condition) set for the EDSS execution period is satisfied is made in accordance with the subroutine shown in FIG. 11.

More specifically, when the CPU proceeds to step 845, the CPU starts processing from step 1100 in FIG. 11, and proceeds to step 1110. At step 1110, the CPU determines whether or not the magnitude of steering angle change rate | dθ | is equal to or greater than the steering angle change rate threshold dθth. Namely, at step 1110, the CPU determines whether or not the steering wheel is rapidly operated.

When the magnitude of steering angle change rate | dθ | is smaller than the steering angle change rate threshold dθth, the CPU makes a "No" determination at step 1110, and proceeds to step 1120. At step 1120, the CPU sets the value of the EDSS OR flag (the EDSS in-execution period override flag) XEOR to "0". Thereafter, the CPU proceeds to step 1195 to terminate the present routine tentatively, and proceeds to step 850 shown in FIG. 8. In this case, the automatic braking is executed at step 855 shown in FIG. 8.

Whereas, when the magnitude of steering angle change rate | dθ | is equal to or greater than the steering angle change rate threshold dθth, the CPU makes a "Yes" determination at step 1110, and proceeds to step 1130. At step 1130, the CPU determines whether or not a steering direction is the same as a direction to avoid the collision between the host vehicle and the obstacle.

Specifically, as shown in FIG. 12A, the CPU calculates a lap amount R between the host vehicle HV and the obstacle OB repeatedly based on the vehicle predicted traveling path, assuming that the host vehicle HV collides with the obstacle OB after the CPU determines that the obstacle is present at step 805. The lap amount R is a length of an overlap between the host vehicle HV and the obstacle OB, assuming that the host vehicle HV collides with the obstacle OB.

Then, the CPU compares a "lap amount R (hereinafter, referred to as a first lap amount) of when it has determined that the obstacle is present in the predicted traveling area of the host vehicle (or, of when the EDSS execution period collision prediction condition becomes satisfied)" with a "lap amount R (hereinafter, referred to as a second lap amount) of when the magnitude of steering angle change rate | dθ | becomes greater than the steering angle change rate threshold dθth after the the EDSS execution period collision prediction condition becomes satisfied (or, after it has determined that the obstacle is present in the predicted traveling area of the host vehicle).

If the second lap amount is smaller than the first lap amount as shown in FIG. 12B, the CPU determines that the steering direction is the same as the direction to avoid the collision between the host vehicle and the obstacle. Note that, the CPU may determine that the steering direction is the same as the direction to avoid the collision between the host vehicle and the obstacle, when the second lap amount becomes a negative value.

Whereas, as shown in FIG. 12C, when the second lap amount (R2) becomes greater than the first lap amount (R1), the CPU determines that the steering direction is not the same as the direction to avoid the collision between the host vehicle and the obstacle.

Note that the CPU may determine that the steering direction is the same as the direction to avoid the collision between the host vehicle and the obstacle, when a distance after steering, described below, is greater than a distance before steering, described below. The distance after steering is a distance between a center of the host vehicle HV in the vehicle width direction and a center of the obstacle OB in the vehicle width direction assuming that the host vehicle HV collides with the obstacle OB after the host vehicle travels along the "vehicle predicted traveling path of when the magnitude of steering angle change rate | dθ | becomes greater than the steering angle change rate threshold dθth (i.e., when it is determined that the steering operation is performed)". The distance before steering is a distance between the center of the host vehicle HV in the vehicle width direction and the center of the obstacle OB in the vehicle width direction assuming that the host vehicle HV collides with the obstacle OB after the host vehicle travels along the "vehicle predicted traveling path of when it is determined that the obstacle is present in the predicted traveling area of the host vehicle (or, of when the EDSS execution period collision prediction condition becomes satisfied).

When the steering direction is not the same as the direction to avoid the collision between the host vehicle and the obstacle, the CPU proceeds to step 1120 from step 1130 to set the value of the EDSS OR flag XEOR to "0". Thereafter, the CPU proceeds to step 1195 to terminate the present routine tentatively, and proceeds to step 850 shown in FIG. 8. In this case, the automatic braking is executed at step 855 shown in FIG. 8.

Whereas, when the steering direction is the same as the direction to avoid the collision between the host vehicle and the obstacle, the CPU proceeds to step 1140 from step 1130 to set the value of the EDSS OR flag XEOR to "1". Thereafter, the CPU proceeds to step 1195 to terminate the present routine tentatively, and proceeds to step 850 shown in FIG. 8. In this case, the CPU makes a "No" determination at step 850, and proceeds to step 860. Accordingly, the automatic braking is prohibited/canceled, and the override is permitted. Namely, the CPU controls the host vehicle in accordance with the driver's driving operation.

In this manner, the CPU determines that the EDSS execution period override condition is satisfied, when the CPU determines that a state of collision avoidance by steering has occurred where the operation onto the steering wheel is made and the traveling direction of the host vehicle has been changed into the direction to avoid the collision with the obstacle, through the processes of step 1110 and step 1130 shown in FIG. 11.

As has been described, the sixth apparatus, similarly to the fifth apparatus, in the second control execution period (i.e., while the emergency stop control is being executed), whether or not the second control execution period operation determination condition is satisfied is determined from an earlier timing (i.e., a timing at which the collision indication value (TTC) reaches the second control execution period collision determination threshold TTCthL), and the first operation can be started based on the determination result.

In addition, according to the sixth apparatus, the EDSS execution period override condition is set to a condition that is satisfied when the steering operation is made and the traveling direction of the host vehicle has been changed into the direction to avoid the collision with the obstacle by that steering operation. Therefore, while the second control is being executed, the collision avoidance operation by the driver's driving operation (i.e., the collision avoidance operation by the driver's steering operation) is prioritized while prohibiting the automatic braking that is the first operation, when the driver's steering operation is clearly for avoiding the collision. Therefore, it is possible to reduce the possibility that the host vehicle is driven based on the erroneous operation made onto the driving operation elements.

Note that, in the fifth and sixth embodiments, the CPU may make a determination similar to the determination made at step 420 (i.e., the determination as to whether or not the collision margin time TTC is equal to or shorter than the maximum collision determination threshold TthMax) both at step 815 and step 840. In this case, if the collision margin time TTC is equal to or shorter than the maximum collision determination threshold TthMax, the CPU proceeds to step 845 from step 840, and proceeds to step 820 from step 815. Furthermore, in this case, the CPU determines whether or not the collision margin time TTC is equal to or shorter than the EDSS execution period collision determination threshold TTCthL between step 850 and step 855. When the collision margin time TTC is equal to or shorter than the EDSS execution period collision determination threshold TTCthL, the CPU proceeds to step 855. Whereas, when the collision margin time TTC is greater than the EDSS execution period collision determination threshold TTCthL, the CPU proceeds to step 860. In addition, in this case, the CPU determines whether or not the collision margin time TTC is equal to or shorter than the EDSS in-execution period collision determination threshold TTCthS between step 825 and step 830. When the collision margin time TTC is equal to or shorter than the EDSS in-execution period collision determination threshold TTCthS, the CPU proceeds to step 830. Whereas, when the collision margin time TTC is greater than the EDSS in-execution period collision determination threshold TTCthS, the CPU proceeds to step 835.

It should be noted that the present disclosure is not limited to the above-described embodiments, and may adopt various modified examples within the scope of the present disclosure as defined by the appended claims and described below.

### (First modified example)

The CPU may obtain information indicating that the driver's anomaly state has occurred when a no-driving-operation state continues for a no-driving-operation determination time threshold or longer. The no-driving-operation state is a state where none of a combination of "the acceleration pedal operation amount AP, the brake pedal operation amount BP, the steering torque Tra, and the level of the signal of the touch sensor 93" changes (or, none of the parameters does not change by respective thresholds or more) due to the driver's operation in a period from a "time point that is a predetermined sampling time before the present time point" to the "present time point".

### (Second modified example)

The CPU may obtain information indicating that the driver's anomaly state has occurred by using the confirmation button 98. For example, the CPU may display, on the warning display device 82, a message to urge the driver to operate the confirmation button 98 when the no-driving-operation state continues for a confirmation necessary time threshold that is shorter than the no-driving-operation determination time threshold or longer. When the CPU does not receive the confirmation signal from the confirmation button 98 in a period from a time point at which the message is displayed to a time point at which a time corresponding to a confirmation time threshold elapses, the CPU determines that the driver's anomaly state has occurred and obtains the information indicating that the driver's anomaly state has occurred.

### (Third modified example)

At step 540 shown in FIG. 5, step 730 shown in FIG. 7, and the like, the CPU may determine that the operation determination condition is satisfied, when the brake pedal 92a is stepped on (i.e., when the brake pedal 92a is changed from an off-state (i.e., a released state) to an on-state (i.e., stepped on state)), or when the brake pedal 92a is in the on-state. In this case, a brake switch that generates an on-signal and an off-signal of the brake pedal 92a may be used.

### (Fourth modified example)

At step 540 shown in FIG. 5, step 730 shown in FIG. 7, and the like, the CPU may determine that the operation determination condition is satisfied, when the acceleration pedal 91a is stepped on (i.e., when the acceleration pedal 91a is changed from an off-state (i.e., a released state) to an on-state (i.e., stepped on state)), or when the acceleration pedal 91a is in the on-state. In this case, an acceleration switch that generates an on-signal and an off-signal of the acceleration pedal 91a may be used.

### (Fifth modified example)

The vehicle control apparatus of the present disclosure can be applied to a host vehicle that is an autonomous driving vehicle in a state where its driving mode has been switched from automatic driving mode to manual driving mode.

## Claims

1. A vehicle control apparatus (DS) comprising:
a first control system (11) that executes a first operation for reducing a possibility of collision between a host vehicle and an obstacle that is present in a predicted traveling area of said host vehicle; and
a second control system (12) that executes a second control for automatically stopping said host vehicle when information indicating that a driver of said host vehicle has fallen into an anomaly state where said driver cannot drive said host vehicle properly is obtained,
**characterized in that**
said vehicle control apparatus is configured in such a manner that a second control in-execution period first operation start condition that is necessary to be satisfied in order for said first system to start executing said first operation while said second control system is not executing said second control and a second control execution period first operation start condition that is necessary to be satisfied in order for said first system to start executing said first operation while said second control system is executing said second control are different from each other.

2. The vehicle control apparatus (DS) according to claim 1,
wherein,
said second control in-execution period first operation start condition is a condition that is satisfied when a collision indication value (TTC) correlating with a possibility that said host vehicle collides with said obstacle reaches a first collision determination threshold (TthNormal);
said second control execution period first operation start condition is a condition that is satisfied when said collision indication value (TTC) reaches a second collision determination threshold (TthLarge); and
said second collision determination threshold is set to a value which said collision indication value reaches before a timing at which said collision indication value reaches said first collision determination threshold.

3. The vehicle control apparatus (DS) according to claim 2,
wherein,
said collision indication value is a collision margin time (TTC) that is a time length till a time point at which said host vehicle is predicted to collide with said obstacle; and
an early collision determination threshold (TthLarge) set as said second collision determination threshold is set to a value greater than a standard collision determination threshold (TthNormal) set as said first collision determination threshold.

4. The vehicle control apparatus (DS) according to claim 1,
wherein,
said second control in-execution period first operation start condition is a condition that is satisfied when a collision indication value (TTC) correlating with a possibility that said host vehicle collides with said obstacle reaches a first collision determination threshold (TthNormal) in a case where an operation determination condition that is satisfied when said driver is operating a driving operation element (91a, 92a, SW) of said host vehicle is not satisfied, and said second control in-execution period first operation start condition is a condition that is satisfied when said collision indication value (TTC) reaches a third collision determination (TthSmall) threshold in a case where an operation determination condition is satisfied;
said second control execution period first operation start condition is a condition that is satisfied when said collision indication value (TTC) reaches said first collision determination threshold (TthNormal) regardless of whether or not said operation determination condition is satisfied; and
said third collision determination threshold (TthSmall) is set to a value which said collision indication value (TTC) reaches after a timing at which said collision indication value (TTC) reaches said first collision determination threshold (TthNormal).

5. The vehicle control apparatus (DS) according to claim 4,
wherein,
said collision indication value (TTC) is a collision margin time (TTC) that is a time length till a time point at which said host vehicle is predicted to collide with said obstacle; and
a delay collision determination threshold (TthSmall) set as said third collision determination threshold is set to a value smaller than a standard collision determination threshold (TthNormal) set as said first collision determination threshold.

6. The vehicle control apparatus (DS) according to claim 1,
wherein,
said second control in-execution period first operation start condition is a condition that is satisfied when a collision indication value (TTC) correlating with a possibility that said host vehicle collides with said obstacle reaches a first collision determination threshold (TthNormal) in a case where a second control in-execution period operation determination condition that is satisfied when said driver is operating a driving operation element (91a, 92a, SW) of said host vehicle is not satisfied, and said second control in-execution period first operation start condition is a condition that is satisfied when said collision indication value (TTC) reaches a third collision determination threshold (TthSmall) in a case where said second control in-execution period operation determination condition is satisfied; and
said second control execution period first operation start condition is a condition that is satisfied when said collision indication value (TTC) reaches said first collision determination threshold (TthNormal) in a case where a second control execution period operation determination condition that is satisfied when said driver is operating said driving operation element (91a, 92a, SW) is not satisfied, and said second control execution period first operation start condition is a condition that is satisfied when said collision indication value (TTC) reaches said third collision determination threshold (TthSmall) in a case where said second control execution period operation determination condition is satisfied;
said second control execution period operation determination condition is set to a condition that is satisfied when said driver operates said driving operation element (91a, 92a, SW) more quickly or more greatly as compared to said second control in-execution period operation determination condition; and
said third collision determination threshold is set to a value which said collision indication value reaches after a timing at which said collision indication value reaches said first collision determination threshold.

7. The vehicle control apparatus (DS) according to claim 6,
wherein,
said collision indication value is a collision margin time (TTC) that is a time length till a time point at which said host vehicle is predicted to collide with said obstacle; and
a delay collision determination threshold (TthSmall) set as said third collision determination threshold is set to a value smaller than a standard collision determination threshold (TthNormal) set as said first collision determination threshold.

8. The vehicle control apparatus (DS) according to claim 1,
wherein,
said second control in-execution period first operation start condition is a condition that is satisfied when a collision indication value (TTC) correlating with a possibility that said host vehicle collides with said obstacle reaches a first collision determination threshold (TthNormal) in a case where a second control in-execution period operation determination condition that is satisfied when said driver is operating a driving operation element (91a, 92a, SW) of said host vehicle is not satisfied, and said second control in-execution period first operation start condition is a condition that is satisfied when said collision indication value (TTC) reaches a third collision determination threshold (TthSmall) in a case where said second control in-execution period operation determination condition is satisfied; and
said second control execution period first operation start condition is a condition that is satisfied when said collision indication value (TTC) reaches said first collision determination threshold (TthNormal) in a case where a second control execution period operation determination condition that is satisfied when said driver is operating said driving operation element (91a, 92a, SW) is not satisfied, and said second control execution period first operation start condition is a condition that is satisfied when said collision indication value (TTC) reaches fourth collision determination threshold (TthMidSmall) in a case where said second control execution period operation determination condition is satisfied;
said second control execution period operation determination condition is a condition which is the same as said second control in-execution period operation determination condition, or is set to a condition that is satisfied when said driver operates said driving operation element (91a, 92a, SW) more quickly or more greatly as compared to said said second control in-execution period operation determination condition;
said third collision determination threshold (TthSmall) is set to a value which said collision indication value reaches (TTC) after a timing at which said collision indication value (TTC) reaches said first collision determination threshold (TthNormal); and
said fourth collision determination threshold (TthMidSmall) is set to a value which said collision indication value (TTC) reaches after a timing at which said collision indication value (TTC) reaches said first collision determination threshold (TthNormal) and before a timing at which said collision indication value (TTC) reaches said third collision determination threshold (TthSmall).

9. The vehicle control apparatus (DS) according to claim 8,
wherein,
said collision indication value (TTC) is a collision margin time (TTC) that is a time length till a time point at which said host vehicle is predicted to collide with said obstacle;
a delay collision determination threshold (TthSmall) set as said third collision determination threshold is set to a value smaller than a standard collision determination threshold (TthNormal) set as said first collision determination threshold; and
an intermediate delay collision determination threshold (TthMidSmall) set as said fourth collision determination threshold is set to a value smaller than said standard collision determination threshold (TthNormal) and greater than said delay collision determination threshold (TthSmall).

10. The vehicle control apparatus (DS) according to claim 1,
wherein,
said first control system is configured to:
in a case where said second control is not being executed,
in a state where a collision indication value (TTC) correlating with a possibility that said host vehicle collides with said obstacle reaches a second control in-execution period collision determination threshold (TTCthS),
determine that said second control in-execution period first operation start condition is satisfied to start executing said first operation when a second control in-execution period operation determination condition that is satisfied when said driver is operating a driving operation element (91a, 92a, SW) of said host vehicle is not satisfied, and
not execute said first operation when second control in-execution period operation determination condition is satisfied; and
in a case where said second control is being executed,
in a state where said collision indication value (TTC) reaches a second control execution period collision determination threshold (TTCthL),
determine that said second control execution period first operation start condition is satisfied to start executing said first operation when a second control execution period operation determination condition that is satisfied when said driver is operating said driving operation element (91a, 92a, SW) is not satisfied, and
not execute said first operation when second control execution period operation determination condition is satisfied;
said second control execution period collision determination threshold (TTCthL) is set to a value which said collision indication value (TTC) reaches before said collision indication value (TTC) reaches said second control in-execution period collision determination threshold (TTCthL), and
said second control execution period operation determination condition is set to a condition that is different from said second control in-execution period operation determination condition.

11. The vehicle control apparatus (DS) according to claim 10,
wherein,
said second control execution period operation determination condition is set to a condition that is satisfied when said driver operates said driving operation element (91a, 92a, SW) more quickly or more greatly as compared to said second control in-execution period operation determination condition.

12. The vehicle control apparatus (DS) according to claim 10,
wherein,
said second control in-execution period operation determination condition is set to a condition that is satisfied regardless of a traveling direction of said host vehicle by steering operation of the host vehicle when said steering operation is performed; and
said second control execution period operation determination condition is set to a condition that is satisfied when said steering operation is performed and said traveling direction of said host vehicle by said steering operation is changed to a direction to avoid the collision between the host vehicle and the obstacle.

13. The vehicle control apparatus (DS) according to claim 10,
wherein,
said second control in-execution period operation determination condition is set to a condition that is satisfied when at least one of an acceleration pedal (91a) of said host vehicle, a brake pedal (92a) of said host vehicle, and a steering wheel (SW) of said host vehicle is operated; and
said second control execution period operation determination condition is set to a condition that is satisfied when a collision avoidance by steering state where a steering operation onto said steering wheel (SW) is performed and a traveling direction of said host vehicle by said steering operation is changed to a direction to avoid the collision between the host vehicle and the obstacle is occurring, but that is not satisfied when said collision avoidance by steering state is not occurring even if any one of said acceleration pedal (91a) of said host vehicle and said brake pedal (92a) of said host vehicle is operated.

14. The vehicle control apparatus (DS) according to any one of claim 10 to claim 13,
wherein,
said collision indication value (TTC) is a collision margin time (TTC) that is a time length till a time point at which said host vehicle is predicted to collide with said obstacle; and
said second control execution period collision determination threshold (TTCthL) is set to a value greater than said second control in-execution period collision determination threshold (TTCthS).

15. A vehicle control method comprising:
a first step of executing a first operation for reducing a possibility of collision between a host vehicle and an obstacle that is present in a predicted traveling area of said host vehicle; and
a second step of executing a second control for automatically stopping said host vehicle when information indicating that a driver of said host vehicle has fallen into an anomaly state where said driver cannot drive said host vehicle properly is obtained,
**characterized in that**
a second control in-execution period first operation start condition that is necessary to be satisfied in order for said first system to start executing said first operation while said second control system is not being executed said second control and a second control execution period first operation start condition that is necessary to be satisfied in order for said first system to start executing said first operation while said second control system is being executing said second control are different from each other.

## Patentansprüche

1. Fahrzeugsteuerungsvorrichtung (DS), umfassend:
ein erstes Steuersystem (11), das einen ersten Betrieb ausführt, um eine Möglichkeit einer Kollision zwischen einem Host-Fahrzeug und einem Hindernis, das in einem vorhergesagten Fahrbereich des Host-Fahrzeugs vorhanden, zu verringern; und
ein zweites Steuersystem (12), das eine zweite Steuerung ausführt, um das Host-Fahrzeug automatisch anzuhalten, wenn Informationen erlangt werden, die angeben, dass ein Fahrer des Host-Fahrzeugs in einen anomalen Zustand geraten ist, in dem der Fahrer das Host-Fahrzeug nicht ordnungsgemäß fahren kann,
**dadurch gekennzeichnet, dass**
die Fahrzeugsteuerungsvorrichtung auf eine Weise konfiguriert ist, dass eine erste Betriebsstartbedingung für zweite Steuerung-nicht-Ausführungsperiode, die erfüllt sein muss, damit das erste System mit der Ausführung des ersten Betriebs beginnt, während das zweite Steuersystem die zweite Steuerung nicht ausführt, und eine erste Betriebsstartbedingung für zweite Steuerung-Ausführungsperiode, die erfüllt sein muss, damit das erste System mit der Ausführung des ersten Betriebs beginnt, während das zweite Steuersystem die zweite Steuerung ausführt, voneinander verschieden sind.

2. Fahrzeugsteuerungsvorrichtung (DS) nach Anspruch 1,
wobei
die erste Betriebsstartbedingung für zweite Steuerung-nicht-Ausführungsperiode eine Bedingung ist, die erfüllt ist, wenn ein Kollisionsangabewert (TTC), der mit einer Möglichkeit korreliert, dass das Host-Fahrzeug mit dem Hindernis kollidiert, einen ersten Kollisionsbestimmungsschwellenwert (TthNormal) erreicht;
die erste Betriebsstartbedingung für zweite Steuerung-Ausführungsperiode eine Bedingung ist, die erfüllt ist, wenn der Kollisionsangabewert (TTC) einen zweiten Kollisionsbestimmungsschwellenwert (TthLarge) erreicht; und
der zweite Kollisionsbestimmungsschwellenwert auf einen Wert gesetzt ist, den der Kollisionsangabewert vor einem Zeitpunkt erreicht, an dem der Kollisionsangabewert den ersten Kollisionsbestimmungsschwellenwert erreicht.

3. Fahrzeugsteuerungsvorrichtung (DS) nach Anspruch 2,
wobei
der Kollisionsangabewert eine Kollisionsgrenzzeit (TTC) ist, die eine Zeitspanne bis zu einem Zeitpunkt ist, an dem vorhergesagt wird, dass das Host-Fahrzeug mit dem Hindernis kollidiert; und
ein als zweiter Kollisionsbestimmungsschwellenwert gesetzter Frühkollisionsbestimmungsschwellenwert (TthLarge) auf einen Wert größer als ein als erster Kollisionsbestimmungsschwellenwert gesetzter Standardkollisionsbestimmungsschwellenwert (TthNormal) gesetzt ist.

4. Fahrzeugsteuerungsvorrichtung (DS) nach Anspruch 1,
wobei
die erste Betriebsstartbedingung für zweite Steuerung-nicht-Ausführungsperiode eine Bedingung ist, die erfüllt ist, wenn ein Kollisionsangabewert (TTC), der mit einer Möglichkeit korreliert, dass das Host-Fahrzeug mit dem Hindernis kollidiert, einen ersten Kollisionsbestimmungsschwellenwert (TthNormal) in einem Fall erreicht, in dem eine Betriebsbestimmungsbedingung, die erfüllt ist, wenn der Fahrer ein Fahrbedienungselement (91a, 92a, SW) des Host-Fahrzeugs betätigt, nicht erfüllt ist, und wobei die erste Betriebsstartbedingung für zweite Steuerung-nicht-Ausführungsperiode eine Bedingung ist, die erfüllt ist, wenn der Kollisionsangabewert (TTC) einen dritten Kollisionsbestimmungsschwellenwert (TthSmall) in einem Fall erreicht, in dem eine Betriebsbestimmungsbedingung erfüllt ist;
wobei die erste Betriebsstartbedingung für zweite Steuerung-Ausführungsperiode eine Bedingung ist, die erfüllt ist, wenn der Kollisionsangabewert (TTC) den ersten Kollisionsbestimmungsschwellenwert (TthNormal) erreicht, unabhängig davon, ob die Betriebsbestimmungsbedingung erfüllt ist oder nicht; und
wobei der dritte Kollisionsbestimmungsschwellenwert (TthSmall) auf einen Wert gesetzt ist, den der Kollisionsangabewert (TTC) nach einem Zeitpunkt erreicht, zu dem der Kollisionsangabewert (TTC) den ersten Kollisionsbestimmungsschwellenwert (TthNormal) erreicht.

5. Fahrzeugsteuerungsvorrichtung (DS) nach Anspruch 4,
wobei
der Kollisionsangabewert (TTC) eine Kollisionsgrenzzeit (TTC) ist, die eine Zeitspanne bis zu einem Zeitpunkt ist, an dem vorhergesagt wird, dass das Host-Fahrzeug mit dem Hindernis kollidiert; und
ein als dritter Kollisionsbestimmungsschwellenwert gesetzter verzögerter Kollisionsbestimmungsschwellenwert (TthSmall) auf einen Wert kleiner als ein als erster Kollisionsbestimmungsschwellenwert gesetzter Standardkollisionsbestimmungsschwellenwert (TthNormal) gesetzt ist.

6. Fahrzeugsteuerungsvorrichtung (DS) nach Anspruch 1,
wobei
die erste Betriebsstartbedingung für zweite Steuerung-nicht-Ausführungsperiode eine Bedingung ist, die erfüllt ist, wenn ein Kollisionsangabewert (TTC), der mit einer Möglichkeit korreliert, dass das Host-Fahrzeug mit dem Hindernis kollidiert, einen ersten Kollisionsbestimmungsschwellenwert (TthNormal) in einem Fall erreicht, in dem eine zweite Steuerung-nicht-Ausführungsperiode-Betriebsbestimmungsbedingung, die erfüllt ist, wenn der Fahrer ein Fahrbedienungselement (91a, 92a, SW) des Host-Fahrzeugs betätigt, nicht erfüllt ist, und wobei die erste Betriebsstartbedingung für zweite Steuerung-nicht-Ausführungsperiode eine Bedingung ist, die erfüllt ist, wenn der Kollisionsangabewert (TTC) einen dritten Kollisionsbestimmungsschwellenwert (TthSmall) in einem Fall erreicht, in dem die zweite Steuerung-nicht-Ausführungsperiode-Betriebsbestimmungsbedingung erfüllt ist; und
die erste Betriebsstartbedingung für zweite Steuerung-Ausführungsperiode eine Bedingung ist, die erfüllt ist, wenn der Kollisionsangabewert (TTC) den ersten Kollisionsbestimmungsschwellenwert (TthNormal) in einem Fall erreicht, in dem eine zweite Steuerung-Ausführungsperiode-Betriebsbestimmungsbedingung, die erfüllt ist, wenn der Fahrer das Fahrbedienungselement (91a, 92a, SW) betätigt, nicht erfüllt ist, und wobei die erste Betriebsstartbedingung für zweite Steuerung-Ausführungsperiode eine Bedingung ist, die erfüllt ist, wenn der Kollisionsangabewert (TTC) den dritten Kollisionsbestimmungsschwellenwert (TthSmall) in einem Fall erreicht, in dem die zweite Steuerung-Ausführungsperiode-Betriebsbestimmungsbedingung erfüllt ist;
die zweite Steuerung-Ausführungsperiode-Betriebsbestimmungsbedingung auf eine Bedingung gesetzt ist, die erfüllt ist, wenn der Fahrer das Fahrbedienungselement (91a, 92a, SW) schneller oder stärker betätigt als bei der zweiten Steuerung-nicht-Ausführungsperiode-Betriebsbestimmungsbedingung; und
der dritte Kollisionsbestimmungsschwellenwert auf einen Wert gesetzt ist, den der Kollisionsangabewert nach einem Zeitpunkt erreicht, an dem der Kollisionsangabewert den ersten Kollisionsbestimmungsschwellenwert erreicht.

7. Fahrzeugsteuerungsvorrichtung (DS) nach Anspruch 6,
wobei
der Kollisionsangabewert eine Kollisionsgrenzzeit (TTC) ist, die eine Zeitdauer bis zu einem Zeitpunkt darstellt, an dem das eigene Fahrzeug voraussichtlich mit dem Hindernis kollidiert; und ein verzögerter Kollisionsbestimmungsschwellenwert (TthSmall), der als dritter Kollisionsbestimmungsschwellenwert gesetzt ist, auf einen Wert gesetzt ist, der kleiner ist als ein Standardkollisionsbestimmungsschwellenwert (TthNormal), der als erster Kollisionsbestimmungsschwellenwert gesetzt ist.

8. Fahrzeugsteuerungsvorrichtung (DS) nach Anspruch 1,
wobei
die erste Betriebsstartbedingung für zweite Steuerung-nicht-Ausführungsperiode eine Bedingung ist, die erfüllt ist, wenn ein Kollisionsangabewert (TTC), der mit einer Möglichkeit korreliert, dass das eigene Fahrzeug mit dem Hindernis kollidiert, einen ersten Kollisionsbestimmungsschwellenwert (TthNormal) erreicht, wenn eine zweite Steuerung-Ausführungsperiode-Betriebsbestimmungsbedingung, die erfüllt ist, wenn der Fahrer ein Fahrbedienungselement (91a, 92a, SW) des eigenen Fahrzeugs betätigt, nicht erfüllt ist, und die erste Betriebsstartbedingung für zweite Steuerung-nicht-Ausführungsperiode eine Bedingung ist, die erfüllt ist, wenn der Kollisionsangabewert (TTC) einen dritten Kollisionsbestimmungsschwellenwert (TthSmall) erreicht, wenn die zweite Steuerung-Ausführungsperiode-Betriebsbestimmungsbedingung erfüllt ist; und
die erste Betriebsstartbedingung für zweite Steuerung-Ausführungsperiode eine Bedingung ist, die erfüllt ist, wenn der Kollisionsangabewert (TTC) den ersten Kollisionsbestimmungsschwellenwert (TthNormal) erreicht, wenn eine zweite Steuerung-Ausführungsperiode-Betriebsbestimmungsbedingung, die erfüllt ist, wenn der Fahrer das Fahrbedienungselement (91a, 92a, SW) betätigt, nicht erfüllt ist, und die erste Betriebsstartbedingung für zweite Steuerung-Ausführungsperiode eine Bedingung ist, die erfüllt ist, wenn der Kollisionsangabewert (TTC) einen vierten Kollisionsbestimmungsschwellenwert (TthMidSmall) erreicht, wenn die zweite Steuerung-Ausführungsperiode-Betriebsbestimmungsbedingung erfüllt ist;
die zweite Steuerung-Ausführungsperiode-Betriebsbestimmungsbedingung eine Bedingung ist, die mit der zweiten Steuerung-Ausführungsperiode-Betriebsbestimmungsbedingung identisch ist oder auf eine Bedingung gesetzt ist, die erfüllt ist, wenn der Fahrer das Fahrbedienungselement (91a, 92a, SW) schneller oder stärker betätigt als bei der zweiten Steuerung-Ausführungsperiode-Betriebsbestimmungsbedingung;
wobei der dritte Kollisionsbestimmungsschwellenwert (TthSmall) auf einen Wert gesetzt ist, den der Kollisionsangabewert (TTC) nach einem Zeitpunkt erreicht, an dem der Kollisionsangabewert (TTC) den ersten Kollisionsbestimmungsschwellenwert (TthNormal) erreicht; und
der vierte Kollisionsbestimmungsschwellenwert (TthMidSmall) auf einen Wert gesetzt ist, den der Kollisionsangabewert (TTC) nach einem Zeitpunkt erreicht, an dem der Kollisionsangabewert (TTC) den ersten Kollisionsbestimmungsschwellenwert (TthNormal) erreicht, und vor einem Zeitpunkt, an dem der Kollisionsangabewert (TTC) den dritten Kollisionsbestimmungsschwellenwert (TthSmall) erreicht.

9. Fahrzeugsteuerungsvorrichtung (DS) nach Anspruch 8,
wobei
der Kollisionsangabewert (TTC) eine Kollisionsgrenzzeit (TTC) ist, die eine Zeitdauer bis zu einem Zeitpunkt darstellt, an dem das eigene Fahrzeug voraussichtlich mit dem Hindernis kollidiert;
ein verzögerter Kollisionsbestimmungsschwellenwert (TthSmall), der als dritter Kollisionsbestimmungsschwellenwert gesetzt ist, auf einen Wert gesetzt ist, der kleiner ist als ein Standardkollisionsbestimmungsschwellenwert (TthNormal), der als erster Kollisionsbestimmungsschwellenwert gesetzt ist; und
ein intermediärer verzögerter Kollisionsbestimmungsschwellenwert (TthMidSmall), der als vierter Kollisionsbestimmungsschwellenwert gesetzt ist, auf einen Wert gesetzt ist, der kleiner ist als der Standardkollisionsbestimmungsschwellenwert (TthNormal) und größer als der verzögerte Kollisionsbestimmungsschwellenwert (TthSmall).

10. Fahrzeugsteuerungsvorrichtung (DS) nach Anspruch 1,
wobei
das erste Steuersystem zu Folgendem konfiguriert ist:
wenn die zweite Steuerung nicht ausgeführt wird,
in einem Zustand, in dem ein Kollisionsangabewert (TTC), der mit einer Möglichkeit korreliert, dass das eigene Fahrzeug mit dem Hindernis kollidiert, einen Kollisionsbestimmungsschwellenwert für die zweite Steuerung-Ausführungsperiode (TTCthS) erreicht,
Bestimmen wird, dass die erste Betriebsstartbedingung für zweite Steuerung-nicht-Ausführungsperiode erfüllt ist, um den ersten Betrieb auszuführen, wenn eine zweite Steuerung-Ausführungsperiode-Betriebsbestimmungsbedingung, die erfüllt ist, wenn der Fahrer ein Fahrbedienungselement (91a, 92a, SW) des eigenen Fahrzeugs betätigt, nicht erfüllt ist, und
nicht Ausführen des ersten Betriebs, wenn die zweite Steuerung-Ausführungsperiode-Betriebsbestimmungsbedingung erfüllt ist; und
wenn die zweite Steuerung durchgeführt wird,
in einem Zustand, in dem der Kollisionsangabewert (TTC) einen Kollisionsbestimmungsschwellenwert für die zweite Steuerung-Ausführungsperiode (TTCthL) erreicht,
Bestimmen, dass die erste Betriebsstartbedingung für zweite Steuerung-Ausführungsperiode erfüllt ist, um den ersten Betrieb zu starten, wenn eine zweite Steuerung-Ausführungsperiode-Betriebsbestimmungsbedingung, die erfüllt ist, wenn der Fahrer das Fahrbedienungselement (91a, 92a, SW) betätigt, nicht erfüllt ist, und
nicht Ausführen des ersten Betriebs, wenn die zweite Steuerung-Ausführungsperiode-Betriebsbestimmungsbedingung erfüllt ist;
wobei der Kollisionsbestimmungsschwellenwert für die zweite Steuerung-Ausführungsperiode (TTCthL) auf einen Wert gesetzt ist, den der Kollisionsangabewert (TTC) erreicht, bevor der Kollisionsangabewert (TTC) den Kollisionsbestimmungsschwellenwert für die zweite Steuerung-Ausführungsperiode (TTCthL) erreicht, und
die zweite Steuerung-Ausführungsperiode-Betriebsbestimmungsbedingung auf eine Bedingung gesetzt ist, die sich von der zweiten Steuerung-Ausführungsperiode-Betriebsbestimmungsbedingung unterscheidet.

11. Fahrzeugsteuerungsvorrichtung (DS) nach Anspruch 10,
wobei
die zweite Steuerung-Ausführungsperiode-Betriebsbestimmungsbedingung auf eine Bedingung gesetzt ist, die erfüllt ist, wenn der Fahrer das Fahrbedienungselement (91a, 92a, SW) schneller oder stärker betätigt als bei der zweiten Steuerung-Ausführungsperiode-Betriebsbestimmungsbedingung.

12. Fahrzeugsteuerungsvorrichtung (DS) nach Anspruch 10,
wobei
die zweite Steuerung-Ausführungsperiode-Betriebsbestimmungsbedingung auf eine Bedingung gesetzt ist, die unabhängig von einer Fahrtrichtung des eigenen Fahrzeugs durch eine Lenkradbetätigung des eigenen Fahrzeugs erfüllt ist, wenn die Lenkradbetätigung durchgeführt wird; und
die zweite Steuerung-Ausführungsperiode-Betriebsbestimmungsbedingung auf eine Bedingung gesetzt ist, die erfüllt ist, wenn die Lenkradbetätigung durchgeführt wird und die Fahrtrichtung des eigenen Fahrzeugs durch die Lenkradbetätigung in eine Richtung geändert wird, um eine Kollision zwischen dem eigenen Fahrzeug und dem Hindernis zu vermeiden.

13. Fahrzeugsteuerungsvorrichtung (DS) nach Anspruch 10,
wobei die zweite Steuerung-Ausführungsperiode-Betriebsbestimmungsbedingung auf eine Bedingung gesetzt ist, die erfüllt ist, wenn mindestens eines von einem Gaspedal (91a) des eigenen Fahrzeugs, einem Bremspedal (92a) des eigenen Fahrzeugs und einem Lenkrad (SW) des eigenen Fahrzeugs betätigt wird; und
die zweite Steuerung-Ausführungsperiode-Betriebsbestimmungsbedingung auf eine Bedingung gesetzt ist, die erfüllt ist, wenn ein Kollisionsvermeidungs-durch-Lenkzustand vorliegt, bei dem eine Lenkradbetätigung am Lenkrad (SW) durchgeführt wird und eine Fahrtrichtung des eigenen Fahrzeugs durch die Lenkradbetätigung in eine Richtung geändert wird, um die Kollision zwischen dem eigenen Fahrzeug und dem Hindernis zu verhindern, die jedoch nicht erfüllt ist, wenn der Kollisionsvermeidung-durch-Lenkzustand nicht vorliegt, selbst wenn eines von dem Gaspedal (91a) des eigenen Fahrzeugs und dem Bremspedal (92a) des eigenen Fahrzeugs betätigt wird.

14. Fahrzeugsteuerungsvorrichtung (DS) nach einem der Ansprüche 10 bis 13,
wobei der Kollisionsangabewert (TTC) eine Kollisionsgrenzzeit (TTC) ist, die eine Zeitdauer bis zu einem Zeitpunkt ist, an dem vorhergesagt wird, dass das eigene Fahrzeug mit dem Hindernis kollidiert; und
der zweite Steuerung-Ausführungsperiode-Kollisionsbestimmungsschwellenwert (TTCthL) auf einen Wert gesetzt ist, der größer ist als der zweite Steuerung-Ausführungsperiode-Kollisionsbestimmungsschwellenwert (TTCthS).

15. Fahrzeugsteuerungsverfahren, umfassend:
einen ersten Schritt eines Ausführens eines ersten Betriebs zum Verringern der Möglichkeit einer Kollision zwischen einem eigenen Fahrzeug und einem Hindernis, das in einem vorhergesagten Fahrbereich des eigenen Fahrzeugs vorhanden; und
einen zweiten Schritt eines Ausführens einer zweiten Steuerung zum automatischen Anhalten des eigenen Fahrzeugs, wenn Informationen erlangt werden, die angeben, dass ein Fahrer des eigenen Fahrzeugs in einen Anomaliezustand geraten ist, in dem der Fahrer das eigene Fahrzeug nicht ordnungsgemäß fahren kann,
**dadurch gekennzeichnet, dass**
eine erste Betriebsstartbedingung für zweite Steuerung-nicht-Ausführungsperiode, die erfüllt sein muss, damit das erste System beginnt, den ersten Betrieb auszuführen, während das zweite Steuerungssystem die zweite Steuerung nicht ausführt, und eine erste Betriebsstartbedingung für zweite Steuerung-Ausführungsperiode, die erfüllt sein muss, damit das erste System beginnt, den ersten Betrieb auszuführen, während das zweite Steuerungssystem die zweite Steuerung ausführt, voneinander verschieden sind.

## Revendications

1. Appareil de commande de véhicule (DS), comprenant :
un premier système de commande (11) qui exécute une première opération pour réduire une possibilité de collision entre un véhicule hôte et un obstacle présent dans une zone de déplacement prédite dudit véhicule hôte ; et
un deuxième système de commande (12) qui exécute une deuxième commande pour arrêter automatiquement ledit véhicule hôte lorsque des informations, indiquant qu'un conducteur dudit véhicule hôte est tombé dans un état anormal dans lequel ledit conducteur ne peut pas conduire correctement ledit véhicule hôte, sont obtenues,
**caractérisé en ce que**
ledit appareil de commande de véhicule est configuré de telle sorte qu'une condition de démarrage de la première opération pendant la période d'inexécution de la deuxième commande, qui doit être satisfaite pour que ledit premier système de commande commence à exécuter ladite première opération pendant que ledit deuxième système de commande n'exécute pas ladite deuxième commande, et une condition de démarrage de la première opération pendant la période d'exécution de la deuxième commande, qui doit être satisfaite pour que ledit premier système de commande commence à exécuter ladite première opération pendant que ledit deuxième système de commande exécute ladite deuxième commande, sont différentes l'une de l'autre.

2. Appareil de commande de véhicule (DS) selon la revendication 1,
dans lequel
ladite condition de démarrage de la première opération pendant la période d'inexécution de la deuxième commande est une condition qui est satisfaite lorsqu'une valeur d'indication de collision (TTC) corrélée à une possibilité que ledit véhicule hôte entre en collision avec ledit obstacle atteint un premier seuil de détermination de collision (TthNormal) ;
ladite condition de démarrage de la première opération pendant la période d'exécution de la deuxième commande est une condition qui est satisfaite lorsque ladite valeur d'indication de collision (TTC) atteint un deuxième seuil de détermination de collision (TthLarge) ; et
ledit deuxième seuil de détermination de collision est réglé à une valeur que ladite valeur d'indication de collision atteint avant un moment auquel ladite valeur d'indication de collision atteint ledit premier seuil de détermination de collision.

3. Appareil de commande de véhicule (DS) selon la revendication 2,
dans lequel
ladite valeur d'indication de collision est un temps de marge de collision (TTC) qui est une durée jusqu'à un instant auquel il est prédit que ledit véhicule hôte entrera en collision avec ledit obstacle ; et
un seuil de détermination de collision anticipée (TthLarge) réglé comme ledit deuxième seuil de détermination de collision est réglé à une valeur supérieure à un seuil de détermination de collision standard (TthNormal) réglé comme ledit premier seuil de détermination de collision.

4. Appareil de commande de véhicule (DS) selon la revendication 1,
dans lequel
ladite condition de démarrage de la première opération pendant la période d'inexécution de la deuxième commande est une condition qui est satisfaite lorsqu'une valeur d'indication de collision (TTC) corrélée à une possibilité que ledit véhicule hôte entre en collision avec ledit obstacle atteint un premier seuil de détermination de collision (TthNormal) dans le cas où une condition de détermination d'opération qui est satisfaite lorsque ledit conducteur actionne un élément d'opération de conduite (91a, 92a, SW) dudit véhicule hôte n'est pas satisfaite, et ladite condition de démarrage de la première opération pendant la période d'inexécution de la deuxième commande est une condition qui est satisfaite lorsque ladite valeur d'indication de collision (TTC) atteint un troisième seuil de détermination de collision (TthSmall) dans le cas où une condition de détermination d'opération est satisfaite ;
ladite condition de démarrage de la première opération pendant la période d'exécution de la deuxième commande est une condition qui est satisfaite lorsque ladite valeur d'indication de collision (TTC) atteint ledit premier seuil de détermination de collision (TthNormal) indépendamment du fait que ladite condition de détermination d'opération soit satisfaite ou non ; et
ledit troisième seuil de détermination de collision (TthSmall) est réglé à une valeur que ladite valeur d'indication de collision (TTC) atteint après un moment auquel ladite valeur d'indication de collision (TTC) atteint ledit premier seuil de détermination de collision (TthNormal).

5. Appareil de commande de véhicule (DS) selon la revendication 4,
dans lequel
ladite valeur d'indication de collision (TTC) est un temps de marge de collision (TTC) qui est une durée jusqu'à un instant auquel il est prédit que ledit véhicule hôte entrera en collision avec ledit obstacle ; et
un seuil de détermination de collision retardée (TthSmall) réglé comme ledit troisième seuil de détermination de collision est réglé à une valeur inférieure à un seuil de détermination de collision standard (TthNormal) réglé comme ledit premier seuil de détermination de collision.

6. Appareil de commande de véhicule (DS) selon la revendication 1,
dans lequel
ladite condition de démarrage de la première opération pendant la période d'inexécution de la deuxième commande est une condition qui est satisfaite lorsqu'une valeur d'indication de collision (TTC) corrélée à une possibilité que ledit véhicule hôte entre en collision avec ledit obstacle atteint un premier seuil de détermination de collision (TthNormal) dans le cas où une condition de détermination d'opération pendant la période d'inexécution de la deuxième commande, qui est satisfaite lorsque ledit conducteur actionne un élément d'opération de conduite (91a, 92a, SW) dudit véhicule hôte, n'est pas satisfaite, et ladite condition de démarrage de la première opération pendant la période d'inexécution de la deuxième commande est une condition qui est satisfaite lorsque ladite valeur d'indication de collision (TTC) atteint un troisième seuil de détermination de collision (TthSmall) dans le cas où ladite condition de détermination d'opération pendant la période d'inexécution de la deuxième commande est satisfaite ; et
ladite condition de démarrage de la première opération pendant la période d'exécution de la deuxième commande est une condition qui est satisfaite lorsque ladite valeur d'indication de collision (TTC) atteint ledit premier seuil de détermination de collision (TthNormal) dans le cas où une condition de détermination d'opération pendant la période d'exécution de la deuxième commande, qui est satisfaite lorsque ledit conducteur actionne ledit élément d'opération de conduite (91a, 92a, SW), n'est pas satisfaite, et ladite condition de démarrage de la première opération pendant la période d'exécution de la deuxième commande est une condition qui est satisfaite lorsque ladite valeur d'indication de collision (TTC) atteint ledit troisième seuil de détermination de collision (TthSmall) dans le cas où ladite condition de détermination d'opération pendant la période d'exécution de la deuxième commande est satisfaite ;
ladite condition de détermination d'opération pendant la période d'exécution de la deuxième commande est réglée à une condition qui est satisfaite lorsque ledit conducteur actionne ledit élément d'opération de conduite (91a, 92a, SW) plus rapidement ou plus fortement par rapport à ladite condition de détermination d'opération pendant la période d'inexécution de la deuxième commande ; et
ledit troisième seuil de détermination de collision est réglé à une valeur que ladite valeur d'indication de collision atteint après un moment auquel ladite valeur d'indication de collision atteint ledit premier seuil de détermination de collision.

7. Appareil de commande de véhicule (DS) selon la revendication 6,
dans lequel
ladite valeur d'indication de collision est un temps de marge de collision (TTC) qui est une durée jusqu'à un instant auquel il est prédit que ledit véhicule hôte entrera en collision avec ledit obstacle ; et
un seuil de détermination de collision retardée (TthSmall) réglé comme ledit troisième seuil de détermination de collision est réglé à une valeur inférieure à un seuil de détermination de collision standard (TthNormal) réglé comme ledit premier seuil de détermination de collision.

8. Appareil de commande de véhicule (DS) selon la revendication 1,
dans lequel,
ladite condition de démarrage de la première opération pendant la période d'inexécution de la deuxième commande est une condition qui est satisfaite lorsqu'une valeur d'indication de collision (TTC) corrélée à une possibilité que ledit véhicule hôte entre en collision avec ledit obstacle atteint un premier seuil de détermination de collision (TthNormal) dans le cas où une condition de détermination d'opération pendant la période d'inexécution de la deuxième commande qui est satisfaite lorsque ledit conducteur actionne un élément d'opération de conduite (91a, 92a, SW) dudit véhicule hôte n'est pas satisfaite, et ladite condition de démarrage de la première opération pendant la période d'inexécution de la deuxième commande est une condition qui est satisfaite lorsque ladite valeur d'indication de collision (TTC) atteint un troisième seuil de détermination de collision (TthSmall) dans le cas où ladite condition de détermination d'opération pendant la période d'inexécution de la deuxième commande est satisfaite ; et
ladite condition de démarrage de la première opération pendant la période d'exécution de la deuxième commande est une condition qui est satisfaite lorsque ladite valeur d'indication de collision (TTC) atteint ledit premier seuil de détermination de collision (TthNormal) dans le cas où une condition de détermination d'opération pendant la période d'exécution de la deuxième commande qui est satisfaite lorsque ledit conducteur actionne ledit élément d'opération de conduite (91a, 92a, SW) n'est pas satisfaite, et ladite condition de démarrage de la première opération pendant la période d'exécution de la deuxième commande est une condition qui est satisfaite lorsque ladite valeur d'indication de collision (TTC) atteint un quatrième seuil de détermination de collision (TthMidSmall) dans le cas où ladite condition de détermination d'opération pendant la période d'exécution de la deuxième commande est satisfaite ;
ladite condition de détermination d'opération pendant la période d'exécution de la deuxième commande est une condition qui est identique à ladite condition de détermination d'opération pendant la période d'inexécution de la deuxième commande, ou est réglée à une condition qui est satisfaite lorsque ledit conducteur actionne ledit élément d'opération de conduite (91a, 92a, SW) plus rapidement ou plus fortement par rapport à ladite condition de détermination d'opération pendant la période d'inexécution de la deuxième commande ;
ledit troisième seuil de détermination de collision (TthSmall) est réglé à une valeur que ladite valeur d'indication de collision (TTC) atteint après un moment auquel ladite valeur d'indication de collision (TTC) atteint ledit premier seuil de détermination de collision (TthNormal) ; et
ledit quatrième seuil de détermination de collision (TthMidSmall) est réglé à une valeur que ladite valeur d'indication de collision (TTC) atteint après un moment auquel ladite valeur d'indication de collision (TTC) atteint ledit premier seuil de détermination de collision (TthNormal) et avant un moment auquel ladite valeur d'indication de collision (TTC) atteint ledit troisième seuil de détermination de collision (TthSmall).

9. Appareil de commande de véhicule (DS) selon la revendication 8,
dans lequel,
ladite valeur d'indication de collision (TTC) est un temps de marge de collision (TTC) qui est une durée jusqu'à un instant auquel il est prédit que ledit véhicule hôte entrera en collision avec ledit obstacle ;
un seuil de détermination de collision retardée (TthSmall) réglé comme ledit troisième seuil de détermination de collision est réglé à une valeur inférieure à un seuil de détermination de collision standard (TthNormal) réglé comme ledit premier seuil de détermination de collision ; et
un seuil de détermination de collision retardée intermédiaire (TthMidSmall) réglé comme ledit quatrième seuil de détermination de collision est réglé à une valeur inférieure audit seuil de détermination de collision standard (TthNormal) et supérieure audit seuil de détermination de collision retardée (TthSmall).

10. Appareil de commande de véhicule (DS) selon la revendication 1,
dans lequel,
ledit premier système de commande est configuré pour :
dans le cas où ladite deuxième commande n'est pas en cours d'exécution,
dans un état où une valeur d'indication de collision (TTC) corrélée à une possibilité que ledit véhicule hôte entre en collision avec ledit obstacle atteint un seuil de détermination de collision pendant la période d'inexécution de la deuxième commande (TTCthS),
déterminer que ladite condition de démarrage de la première opération pendant la période d'inexécution de la deuxième commande est satisfaite pour commencer l'exécution de ladite première opération lorsqu'une condition de détermination d'opération pendant la période d'inexécution de la deuxième commande qui est satisfaite lorsque ledit conducteur actionne un élément d'opération de conduite (91a, 92a, SW) dudit véhicule hôte n'est pas satisfaite, et
ne pas exécuter ladite première opération lorsque la condition de détermination d'opération pendant la période d'inexécution de la deuxième commande est satisfaite ; et
dans le cas où ladite deuxième commande est en cours d'exécution,
dans un état où ladite valeur d'indication de collision (TTC) atteint un seuil de détermination de collision pendant la période d'exécution de la deuxième commande (TTCthL),
déterminer que ladite condition de démarrage de la première opération pendant la période d'exécution de la deuxième commande est satisfaite pour commencer l'exécution de ladite première opération lorsqu'une condition de détermination d'opération pendant la période d'exécution de la deuxième commande qui est satisfaite lorsque ledit conducteur actionne ledit élément d'opération de conduite (91a, 92a, SW) n'est pas satisfaite, et
ne pas exécuter ladite première opération lorsque la condition de détermination d'opération pendant la période d'exécution de la deuxième commande est satisfaite ;
ledit seuil de détermination de collision pendant la période d'exécution de la deuxième commande (TTCthL) est réglé à une valeur que ladite valeur d'indication de collision (TTC) atteint avant que ladite valeur d'indication de collision (TTC) atteigne ledit seuil de détermination de collision pendant la période d'inexécution de la deuxième commande (TTCthL), et
ladite condition de détermination d'opération pendant la période d'exécution de la deuxième commande est réglée à une condition qui est différente de ladite condition de détermination d'opération pendant la période d'inexécution de la deuxième commande.

11. Appareil de commande de véhicule (DS) selon la revendication 10,
dans lequel,
ladite condition de détermination d'opération pendant la période d'exécution de la deuxième commande est réglée à une condition qui est satisfaite lorsque ledit conducteur actionne ledit élément d'opération de conduite (91a, 92a, SW) plus rapidement ou plus fortement par rapport à ladite condition de détermination d'opération pendant la période d'inexécution de la deuxième commande.

12. Appareil de commande de véhicule (DS) selon la revendication 10,
dans lequel
ladite condition de détermination d'opération pendant la période d'inexécution de la deuxième commande est réglée à une condition qui est satisfaite indépendamment d'une direction de déplacement dudit véhicule hôte par une opération de direction du véhicule hôte lorsque ladite opération de direction est effectuée ; et
ladite condition de détermination d'opération pendant la période d'exécution de la deuxième commande est réglée à une condition qui est satisfaite lorsque ladite opération de direction est effectuée et que ladite direction de déplacement dudit véhicule hôte par ladite opération de direction est modifiée en une direction permettant d'éviter la collision entre le véhicule hôte et l'obstacle.

13. Appareil de commande de véhicule (DS) selon la revendication 10,
dans lequel,
ladite condition de détermination d'opération pendant la période d'inexécution de la deuxième commande est réglée à une condition qui est satisfaite lorsque au moins l'un(e) parmi une pédale d'accélérateur (91a) dudit véhicule hôte, une pédale de frein (92a) dudit véhicule hôte, et un volant de direction (SW) dudit véhicule hôte est actionné(e) ; et
ladite condition de détermination d'opération pendant la période d'exécution de la deuxième commande est réglée à une condition qui est satisfaite lorsque se produit un état d'évitement de collision par direction, dans lequel une opération de direction sur ledit volant de direction (SW) est effectuée et une direction de déplacement dudit véhicule hôte par ladite opération de direction est modifiée en une direction permettant d'éviter la collision entre le véhicule hôte et l'obstacle, mais qui n'est pas satisfaite lorsque ledit état d'évitement de collision par direction ne se produit pas, même si l'une quelconque de ladite pédale d'accélérateur (91a) dudit véhicule hôte et de ladite pédale de frein (92a) dudit véhicule hôte est actionnée.

14. Appareil de commande de véhicule (DS) selon l'une quelconque des revendications 10 à 13,
dans lequel,
ladite valeur d'indication de collision (TTC) est un temps de marge de collision (TTC) qui est une durée jusqu'à un instant auquel il est prédit que ledit véhicule hôte entrera en collision avec ledit obstacle ; et
ledit seuil de détermination de collision pendant la période d'exécution de la deuxième commande (TTCthL) est réglé à une valeur supérieure audit seuil de détermination de collision pendant la période d'inexécution de la deuxième commande (TTCthS).

15. Procédé de commande de véhicule, comprenant :
une première étape consistant à exécuter une première opération pour réduire une possibilité de collision entre un véhicule hôte et un obstacle présent dans une zone de déplacement prévue dudit véhicule hôte ; et
une deuxième étape consistant à exécuter une deuxième commande pour arrêter automatiquement ledit véhicule hôte lorsque des informations, indiquant qu'un conducteur dudit véhicule hôte est tombé dans un état anormal dans lequel ledit conducteur ne peut pas conduire correctement ledit véhicule hôte, sont obtenues,
**caractérisé en ce que**
une condition de démarrage de la première opération pendant la période d'inexécution de la deuxième commande, qui doit être satisfaite pour que ledit premier système de commande commence à exécuter ladite première opération pendant que ledit deuxième système de commande n'exécute pas ladite deuxième commande, et une condition de démarrage de la première opération pendant la période d'exécution de la deuxième commande, qui doit être satisfaite pour que ledit premier système de commande commence à exécuter ladite première opération pendant que ledit deuxième système de commande exécute ladite deuxième commande, sont différentes l'une de l'autre.
